Europäisches Patentamt

European Patent Office

Office européen des brevets

(19)

(11) EP 1 480 211 A2

## (12) EUROPEAN PATENT APPLICATION

(43) Date of publication:
24.11.2004 Bulletin 2004/48

(51) Int Cl.7: G11B 19/26

(21) Application number: 04010705.4

(22) Date of filing: 05.05.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 09.05.2003 JP 2003132200
09.02.2004 JP 2004032649

(71) Applicant: Pioneer Corporation
Tokyo-to (JP)

(72) Inventors:
• Tokudome, Kenichi
Tokorozawa-shi Saitama-ken (JP)
• Oishi, Masami
Tokorozawa-shi Saitama-ken (JP)
• Okoge, Takahiro
Tokorozawa-shi Saitama-ken (JP)

(74) Representative: Grünecker, Kinkeldey,
Stockmair & Schwanhäusser Anwaltssozietät
Maximilianstrasse 58
80538 München (DE)

(54) Information reproduction apparatus, information reproduction method and information recording medium for a rotation control program

(57) An information reproduction apparatus (2), characterized in that the information reproduction apparatus is provided with a driving device (12) which rotates an information recording medium in order to read out predetermined information from the information recording medium (11); a reading device (18) which reads out the information on the basis of commands issued from an external host; a measurement device (19) which measures a command interval of the commands; and a rotation control device (13a) which controls a rotation speed of the driving device on the basis of the command interval measured by the measurement device.

FIG. 1

EP 1 480 211 A2

**Description**

BACKGROUND OF THE INVENTION

1. Field of the Invention:

The present invention relates to an information reproduction apparatus which reads out and reproduces information recorded in an information recording medium which is driven to rotate.

2.Related Art:

An information reproduction apparatus, which performs rotation control of a conventional information recording medium to thereby reproduce predetermined information from the information recording medium, reproduces information recorded in the information recording medium according to types of the information recording media which are optical discs such as a CD (Compact Disc), a CD-R (Compact Disc-Recordable) , a CD-RW (Compact Disc-Rewritable) , a DVD (Digital Versatile Disc), a DVD-R (Digital Versatile Disc-Recordable) a DVD-RAM (Digital Versatile Disc-Random Access Memory), and an 8 cm DISC, logical formats of these information recording media such as data, audio, and video, and types of host commands such as an analog reproduction command (PLAY AUDIO command) and a digital reproduction command (READ-CD command) at the time of reproduction of CD-DA (Compact Disc Digital Audio) and an indispensable command which is issued when reproduction or the like of video in a DVD is performed.

For example, this information reproduction apparatus is adapted to control a rotation speed according to a difference of a logical format in the case in which voice information in a CD is reproduced, and is adapted to control to decrease a rotation speed on the basis of issuance of an indispensable command (command related to authentication) at the time of reproduction of video in the case in which video information in a DVD is reproduced.

In addition, in the case in which the conventional information reproduction apparatus reads out data by controlling a rotation speed according to a difference of a logical format at the time of voice reproduction of a CD, the information reproduction apparatus cannot distinguish whether a readout form in reading out the information is copy of data or appreciation of music for reproducing information to output the information to the outside, and places importance on high-speed copying to read out the information at a high rotation speed even at the time of the appreciation of music. Thus, unnecessary vibration, noise, power consumption, and the like are caused.

Further, in the case in which the conventional information reproduction apparatus reads out data by performing control of a rotation speed on the basis of issuance of an indispensable command at the time of video reproduction of a DVD, the information reproduction apparatus cannot increase the rotation speed when it is desired to read out data at a high speed by copying or the like.

In order to solve these problems, there has been proposed a method of controlling a rotation speed of an information recording medium on the basis of a transfer rate (see US2002024902A1)

However, in rotation number control according to a CAV (Constant Angular Velocity) system which is presently a main stream as indicated in Japanese Patent Application Laid-Open No. 2002-8316, since a transfer rate is different depending upon a readout position (position of a pickup) , it is necessary to change a threshold value according to the readout position. Readout performance is decreased by processing for calculating the threshold value.

The present invention has been devised in view of the above-mentioned problems, and it is an object of the present invention to provide an information reproduction apparatus and the like which can perform readout of data from an information recording medium, which is in accordance with a reproduction request of a user, at an optimal readout speed and realize reduction of noise and power consumption due to vibration of rotation of the information recording medium depending upon a readout form of the user.

SUMMARY OF THE INVENTION

The present invention will be hereinafter described. Note that, reference numerals in the attached figures are written in parentheses for ease of understanding of the present invention, which does not limit the present invention to illustrated forms.

The above object of the present invention can be achieved by an information reproduction apparatus of the present invention. The information reproduction apparatus is provided with a drive device which rotates an information recording medium in order to read out predetermined information from the information recording medium; a reading device which reads out the information on the basis of commands issued from an external host; a measurement device which measures a command interval of the commands; and a rotation control device which controls a rotation speed of the driving device on the basis of the command interval measured by the measurement device.

According to the present invention, processing from readout of information from the information recording medium until reproduction of the information can be performed efficiently. In addition, for example, by decreasing a rotation speed for reproduction such as AV reproduction which does not require high-speed readout, reduction of vibration, noise, power consumption, and the like of the drive due to unnecessary high-speed rotation can be realized.

In one aspect of the present invention can be achieved by the information reproduction of the present invention. The information reproduction apparatus of the present invention is further provided with a calculation device that calculates an average value of the command interval on the basis of plural command intervals which are generated at least one of a predetermined time and a predetermined number of times, wherein the rotation control device controls a rotation speed of the driving device on the basis of the average value of the command interval calculated by the calculation device.

According to the present invention, a command interval and an average value of a command interval is measured and calculated on the basis of a reproduction command, which is issued from a host in accordance with a reproduction request for the information recordingmedium from a user, and a rotation speed of a first drive unit (rotation speed of the information recording medium) is controlled on the basis of the measured interval of commands and average value of a command interval. Therefore, the rotation speed of the first drive unit can be controlled in accordance with a difference of a readout form of the user. In the case in which AV data is reproduced, processing for decreasing a readout speed (rotation speed) on the drive side is performed. As a result, the rotation speed of the first drive unit is made substantially equal to a speed required for the host side to reproduce information, whereby vibration, noise, and the like of the drive due to unnecessary high-speed rotation can be reduced. In the case in which processing for reading out AV data is performed at a low rotation speed, if a readout form of a user is changed to ripping or the like, processing for increasing a readout speed (rotation speed) on a drive side is performed.

In another aspect of the present invention can be achieved by the information reproduction of the present invention. The information reproduction apparatus of the present invention is further provided with a comparison device which compares the calculated average value of the command interval and a predetermined threshold value, wherein the rotation control device performs control for decreasing the number of rotations of the driving device in the case in which the average value of the command interval has exceeded the threshold value as a result of the comparison by the comparison device.

According to the present invention, processing from readout of information from the information recording medium until reproduction of the information can be performed efficiently. In addition, for example, by decreasing a rotation speed for reproduction such as AV reproduction which does not require high-speed readout, reduction of vibration, noise, power consumption, and the like of the drive due to unnecessary high-speed rotation can be realized.

In further aspect of the present invention can be achieved by the information reproduction of the present invention. The information reproduction apparatus of the present invention is further providedwith a comparison device which compares the detected average value of the command interval and a predetermined threshold value, wherein the rotation control device performs control for increasing the number of rotations of the driving device in the case in which the average value of the command interval is equal to or smaller than the threshold value as a result of the comparison by the comparison device.

According to the present invention, in the case in which processing for reading out AV data is performed at a low rotation speed, if a readout form of a user is changed to ripping or the like, processing for increasing a readout speed (rotation speed) on a drive side is performed. As a result, since a host side is not required to wait until information is stored in a cache memory on the drive side, processing from readout of information from an information recording medium to reproduction of the information can be performed efficiently.

In further aspect of the present invention can be achieved by the information reproduction of the present invention. The information reproduction apparatus of the present invention is further provided with a rotation number judgment device which judges whether or not the rotation speed of the driving device has exceeded a predetermined rotation speed; and a comparison device which compares the command interval with a predetermined threshold value, wherein the rotation control device controls the rotation speed of the driving device on the basis of a result of the judgment by the rotation number judgment device and a result of the comparison by the comparison device.

According to the present invention, processing from readout of information from the information recording medium until reproduction of the information can be performed efficiently. In addition, for example, by decreasing a rotation speed for reproduction such as AV reproduction which does not require high-speed readout, reduction of vibration, noise, power consumption, and the like of the drive due to unnecessary high-speed rotation can be realized. In the case in which processing for reading out AV data is performed at a low rotation speed, if a readout form of a user is changed to ripping or the like, processing for increasing a readout speed (rotation speed) on a drive side is performed. As a result, since a host side is not required to wait until information is stored in a cache memory on the drive side, processing from readout of information from an information recording medium to reproduction of the information can be performed efficiently.

In further aspect of the present invention can be achieved by the information reproduction of the present invention. The information reproduction apparatus of the present invention is further provided with a continuity judgment device which judges whether or not the measurement of the command interval has been performed continuously for a threshold value or more which is defined by at least one of a predetermined time or a predetermined number of times, wherein the rotation control device which controls the rotation speed of the driving device on the basis of a result of the judgment by the rotation number judgment device, a result of the judgment by the continuity judgment device, and a result of the comparison by the comparison device.

According to the present invention, in the case in which a result of the judgment by a judgment unit has exceeded a predetermined number of rotations, a result of the comparison by a comparison unit is equal to or larger than a threshold value, and measurement of a command interval performed by a measurement unit has been performed continuously for a time or by the number of times equal to or larger than a threshold value which is defined by at least one of a predetermined time and a predetermined number of times, it is judges that reproduction of AV data is performed, and processing for decreasing a readout speed (number of rotations) on the drive side is performed. As a result, by decreasing the number of rotations, vibration, noise, and the like of a drive due to unnecessary high-speed rotation can be reduced. In addition, in the case in which a result of the judgment by the judgment unit is equal to or smaller than a predetermined number of rotations, a result of the comparison by the comparison unit is equal to or smaller than a threshold value, and measurement of a command interval performed by the measurement unit has been performed continuously for a time or by the number of times equal to or larger than a threshold value which is defined by at least one of a predetermined time and a predetermined number of times, in the case in which processing for reading out AV data is processed at the low number of rotations, it is judges that a readout form of a user has changed to ripping or the like, and processing for increasing a readout speed (number of rotations) on the drive side is performed. As a result, a host side is not required to wait for information to be stored in a cache memory on the drive side, processing from readout of information from an information recording medium to reproduction of the information can be performed efficiently.

In further aspect of the present invention can be achieved by the information reproduction of the present invention. The information reproduction apparatus of the present invention is further provided with a re-measurement device which re-measures the command interval in the case in which the command interval has been continuing for a predetermined time or more.

According to the present invention, in a case in which the command interval has increased to a threshold value or more in a state in which the number of rotations is high (e. g. , during reproduction of AV data) , control for decreasing the number of rotations is performed. Thus, it is necessary to prevent measurement of a command interval from being performed incorrectly at the time when reading out at high-speed rotation is desirable such as the time of normal data readout. In the normal data readout, in the case in which a readout request from a user is not made intermittently and suspension and resumption are repeated, a command interval is measured to be longer than it actually is. Since command interval information is discarded and measured again, erroneous measurement of a command interval can be prevented. Thus, decrease in the number of rotations at the time of normal data readout can be prevented.

In further aspect of the present invention can be achieved by an information reproduction of the present invention. The information reproduction apparatus is provided with a driving device which rotates an information recording medium in order to read out predetermined information; a readout device which reads out the predetermined information from the information recording medium; a storing device which has a predetermined storage area for temporarily storing the read-out information; a detection device which detects a ratio, which is occupied by the read-out and stored information with respect to the storage area of the storing device, as cache use rate information; and a rotation control device (13a)which controls a rotation speed of the driving device on the basis of the cache use rate information detected by the detection device.

According to the present invention, transfer of an information to a host read out from an information recording medium is processed at a high speed by increasing the rotation speed of a first drive unit in this way, the information is transferred to the host at a high speed. Thus, an input rate on a drive side becomes higher than an output rate on a host side, and the host is not required to wait for the information to be stored in a cache memory on the drive side.

In further aspect of the present invention can be achieved by the information reproduction of the present invention. The information reproduction apparatus of the present invention is further provided with a detection device which detects the cache use rate information which is read out according to at least one of a predetermined time and a predetermined number of times; a calculation device which calculates an average value of the cache use rate information detected by the detection device; and a rotation control device for controlling the rotation speed of the drive unit on the basis of the average value calculated by the calculation device.

According to the present invention, transfer of an information to a host read out from an information recording medium is processed at a high speed by increasing the rotation speed of a first drive unit in this way, the information is transferred to the host at a high speed. Thus, an input rate on a drive side becomes higher than an output rate on a host side, and the host is not required to wait for the information to be stored in a cache memory on the drive side.

In further aspect of the present invention can be achieved by the information reproduction of the present invention. The information reproduction apparatus of the present invention is further provided with a comparison device which compares the calculated average value of the cache use rate information with a predetermined threshold value, wherein the rotation control device controls performs control to decrease the number of rotations of the driving device in the case in which the average value of the cache use rate information has exceeded the threshold value as a result of the comparison by the comparison device.

According to the present invention, readout is processed as a low speed by decreasing a rotation speed of a first drive unit, whereby vibration, noise, and the like of the drive due to unnecessary high-speed rotation can be reduced.

In further aspect of the present invention can be achieved by the information reproduction of the present invention. The information reproduction apparatus of the present invention is further provided with a comparison device which compares the calculated average value of the cache use rate information with a predetermined threshold value, wherein the control device performs control to increase the number of rotations of the driving device in the case in which a ratio, which is occupiedby the stored information with respect to the storage area of the storing device, is equal to or lower than the threshold value as a result of the comparison by the comparison device.

According to the present invention, transfer of an information to a host read out from an information recording medium is processed at a high speed by increasing the rotation speed of a first drive unit in this way, the information is transferred to the host at a high speed. Thus, an input rate on a drive side becomes higher than an output rate on a host side, and the host is not required to wait for the information to be stored in a cache memory on the drive side.

In further aspect of the present invention can be achieved by the information reproduction of the present invention. The information reproduction device of the present invention is further provided with a comparison device which compares the calculated average value of the command interval with each of first and second threshold values' set in advance, wherein the rotation control device decreases a number of rotations of the driving device in the case in which the average value of the command interval is equal to or larger than the first threshold value and increases the number of rotations of the driving device in the case in which the average value of the command interval is equal to or smaller than the second threshold value as a result of the comparison by the comparison device.

According to the present invention, a command interval is detected and an average value of the interval of command is calculated on the basis of a reproduction command issued from a host in accordance with a reproduction request for an information recording medium from a user, and if the average value of the command interval is equal to or larger than a predetermined threshold value, a dispersion value of the average value of the command interval is further calculated, a dispersion value and a predetermined threshold value are compared, and a rotation speed of a first drive unit (rotation speed of the information recording medium ) is controlled on the basis of a result of the comparison. In addition, if the average value of the command interval is equal to or smaller than a predetermined threshold value, in the case in which the number of rotations of the information recording medium is controlled to change from high-speed rotation to low-speed rotation on the basis of the average value of the command interval measured and calculated before, rotation of the information recording medium is controlled to change from low-speed rotation to high-speed rotation only when the average value of the command interval increases to be larger than the predetermined threshold value P after the rotation control. It becomes possible to judge a use form of a user correctly and control an information recording medium at a proper number of rotations according to the use form.

In further aspect of the present invention can be achieved by the information reproduction of the present invention. The information reproduction apparatus of the present invention is further provided with a comparison device which, in the case in which a command interval is measured before, compares the average value of the command interval with a threshold value set in advance; a calculation device for calculating a dispersion value on the basis of one of the command interval measured before and an average value of the command interval which is calculated on the basis of the command interval measured before in the case in which the average value of the command interval is equal to or larger than the threshold value as a result of the comparison by the comparison device; and a judgment device for judging whether or not the dispersion value is equal to or larger than a dispersion threshold value which is a threshold value set in advance for comparison with the dispersion value, wherein the rotation control device controls the rotation speed of the driving device on the basis of a result of the judgment by the judgment device.

According to the present invention, a control unit calculates variance (dispersion value) of an average value of a command interval with a calculation unit. Since variance (dispersion value) of the average value of the command interval decreases during AV data reproduction, a use form of the user can be judged more correctly by this processing.

In further aspect of the present invention can be achieved by the information reproduction of the present invention. The information reproduction apparatus of the present invention is further provided with a detection device for detecting a rotation speed of the information recording medium in the case in which it is judged by the judgment device that the dispersion value is smaller than the dispersion threshold value; and a judgment device for judging whether or not the information recording medium is rotating at a high speed as a result of the detection by the detection device, wherein the rotation control device decreases the number of rotations of the information recording medium in the case in which the information recording medium is rotating at a high speed as a result of the judgment by the judgment device.

According to the present invention, it becomes possible to judge a use form of a user correctly and control an information recording medium at a proper number of rotations according to the use form.

In further aspect of the present invention can be achieved by the information reproduction of the present invention. The information reproduction apparatus of the present invention is further provided with a comparison device which, in the case in which a command interval is measured before, and rotation number control for controlling the number of rotations of the information recording medium to change from high-speed rotation to low-speed rotation is performed on the basis of an average value of the command interval calculated according to the measured command interval, compares the average value of the command interval with a threshold value for rotation control which is a threshold value set in advance; and a detection device which, in the case in which the average value of the command interval is equal to or smaller than the threshold value, detects an average value of the command interval equal to or larger than the threshold value for rotation control after immediately preceding rotation number control is performed, wherein the rotation control device controls a rotation speed of the driving device on the basis of a result of the detection by the detection device.

According to the present invention, If an average value of the command interval does not increase to be larger than a threshold value at all in a predetermined period, even if the average value of the command interval decreases to be equal to or smaller than a threshold value, an information recordingmedium is never controlled to rotate at a high-speed. Thus, occurrence of increase and decrease of the number of rotations during AV data appreciation can be prevented.

In further aspect of the present invention can be achieved by the information reproduction of the present invention. The information reproduction apparatus of the present invention is further provided with a rotation number detection device which, in the case in which an average value of the command interval equal to or larger than the threshold value is detected by the detection device, detects a rotation speed of the information recording medium; and a judgment device for judging whether or not the information recording medium is rotating at a low speed as a result of the detection by the detection device, wherein the rotation control device increases the number of rotations of the information recording medium in the case in which the information recording medium is rotating at a low speed as a result of the judgment by the judgment device.

According to the present invention, it becomes possible to judge a use form of a user correctly and control an information recording medium at a proper number of rotations according to the use form.

BRIEF DESCRIPTION OF THE DRAWINGS

FIG. 1 is a schematic diagram of an information reproduction apparatus;
FIGS. 2A to 2C are time charts by readout form in an ordinary information reproduction apparatus;
FIG. 3 is a flowchart showing processing which is executed on the basis of a readout request from a user in a first embodiment;
FIG. 4 is a flowchart showing processing which is executed on the basis of a readout request from a user in a second embodiment;
FIG. 5 is a flowchart showing processing which is executed on the basis of a readout request from a user in a third embodiment;
FIG. 6 is a flowchart showingprocessing for calculating an average value of a cache use rate;
FIG. 7 is a flowchart showing a processing for calculating an average value of a cache use rate in other embodiments; and
FIG. 8 is a flowchart showing processing which is executed on the basis of a readout request from a user in the fourth embodiment.

DETAILED DESCRIPTION OF THE PREFERRED EMBODIMENTS

The respective embodiments of the present invention will be hereinafter described. In the beginning, information reproduction apparatus, which are used in the respective embodiments, will be described in details.

(First embodiment)

First, a first embodiment of an information reproduction apparatus of this application will be described.
An information reproduction apparatus of this embodiment is adapted to calculate an average value of a command interval according to a reproduction command, which is issued at the time of reproduction of information recorded in an information recording medium, and control a rotation speed of the information recording medium on the basis of the calculated average value.

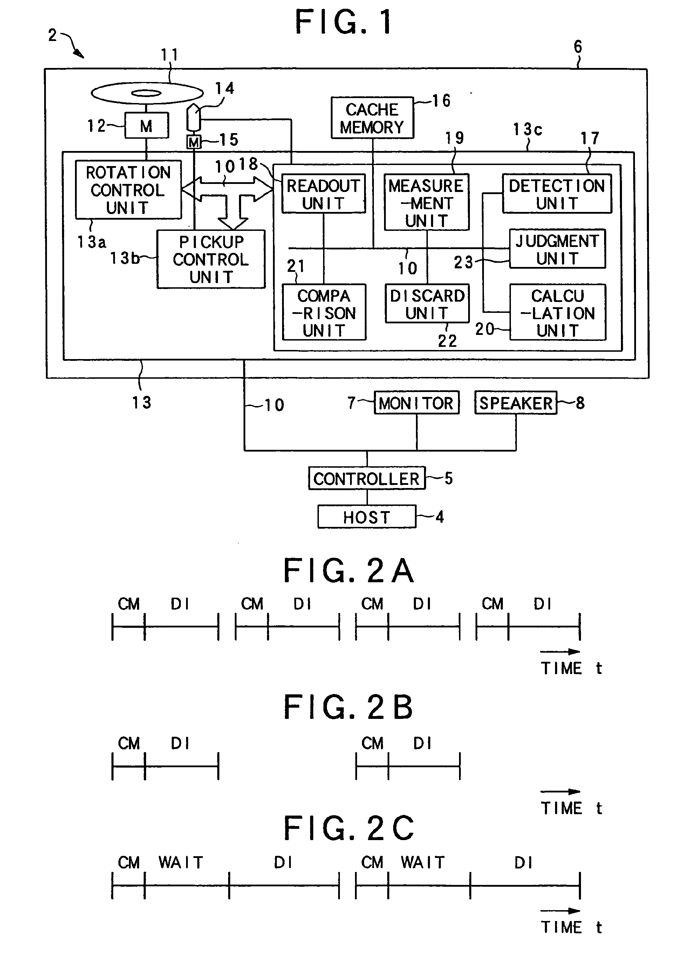

FIG. 1 is a schematic diagram of the information reproduction apparatus in this embodiment.

As shown in FIG. 1, an information reproduction apparatus 2 includes: a host 4 which issues a command for reproducing information recorded in an information recording medium (hereinafter referred to as "reproduction command"); a controller 5 which is integrated in the host 4 or incorporated in a separate body and controls respective units on the basis of an instruction of the host; a drive 6 which reads out contents information (hereinafter referred to as "information") such as music information and video information from an information recording medium 11 on the basis of the reproduction command; a monitor 7 which outputs the video information; and a speaker 8 which outputs the voice information to the outside as voices.

Note that the host 4, the controller 5, the drive 6, the monitor 7, and the speaker 8 are connected to each other via a bus 10.

In addition, the information recording medium 11 means an optical disc such as a CD, a CD-R or a CD-RW which are mainly used as a disc for data, a CD-DA (including 8 cm DISC) which is mainly used as a disc for music, or a DVD, a DVD-R, or a DVD-RAM which is mainly used as a disc for movies.

The host 4 issues a reproduction command for reproducing information recorded in the information recording medium 11, which is determined mainly in accordance with a use form for reproduction of the information recorded in the information recording medium 11, that is, in accordance with a type of the information recording medium 11 stored in the drive 6 and an operation instruction from a user. In addition, the host 4 generates various kinds of information on the basis of the reproduction command to supervise the respective units via the controller 5.

More specifically, in order to actually read out information from the information recording medium 11 on the basis of an instruction of the user such as copy or reproduction of the information, the host 4 issues a reproduction command including an address where the information is actually stored in the information recording medium 11, identification information of the information to be read out, and other information, and controls the respective units on the basis of this reproduction command. In particular, the host 4 instructs the controller 5 to read out the information from the information recording medium 11 on the basis of this reproduction command.

For example, in the case in which one instruction is received from the user, the host 4 issues plural reproduction commands for reading out plural pieces of information recorded in respective locations of the information recording medium 11 in order to complete this one instruction.

In addition, the host 4 includes a not-shown cache memory 16 for temporarily storing information for reproducing, for example, music in a music CD or video in a video CD. As described later, this cache memory 16 temporarily stores the information read out from the information recording medium 11 via the controller 5. Further, for example, the cache memory 16 constitutes a storing device of this application.

Note that, various kinds of information to be generated onthebasisofareproductioncommandare, forexample, control information for, in the case in which a music CD is selected, outputting voices from the speaker 8 in order to reproduce music in the music CD, control information for, in the case in which a video DVD is selected, outputting video from the monitor 7 and voices for the video from the speaker 8 in order to reproduce video in the video DVD.

For example, the host 4 constitutes an external host related to the present invention.

The controller 5 actually controls the respective unit on the basis of a reproduction command issued in the host 4. In particular, this controller 5 transfers a reproduction command issued in the host 4 to the drive 6 and causes the drive 6 to read out predetermined information from the information recording medium 11 on the basis of the reproduction command, and transfers the read-out information to the host 4, more specifically, to the cache memory of the host 4.

In addition, for example, in order to perform video display from the monitor 7 or voice output from the speaker 8, this controller 5 acquires information stored in the cache memory of the host 4 and transfers the acquired information to the monitor 7 or the speaker 8.

The drive 6 reads out information on the basis of a reproduction command, which is mainly issued from the host 4 via the controller 5, and transfers the read-out information to the host 4 via the controller 5.

More specifically, this drive 6 includes: a first drive unit 12 which has a structure to which the information recording medium 11 is detachably mountable and has a spindle motor for rotating this information recording medium 11; a rotation control unit 13a for controlling this first drive unit 12; a pickup unit 14 for condensing and irradiating a laser beam on the information recording medium 11; a second drive unit 15 which has a motor for moving this pickup unit 14 in a radial direction of the information recording medium 11; a pickup control unit 13b for controlling this second drive unit 15; a signal processing unit 13c which determines a rotation speed of the information recording medium 11 on the basis of the information read out from the information recording medium 11; and a cache memory 16 which has a storage area for temporarily storing the read-out information and a predetermined value calculated by a signal processing unit 13c to be described later (hereinafter referred to as "calculated value"). The first drive unit 12, the rotation control unit 13a, the pickup control unit 13b, the signal processing unit 13c, the pickup unit 14, the second drive unit 15, and the cache memory 16 are connected to each other via a bus 10.

Note that the rotation control unit 13a, the pickup control unit 13b, andthe signal processingunit 13c constitute a control unit 13 and are connected by the bus 10 so as to operate in association with each other in reading out information from the information recording medium 11.

In addition, accumulated command information and calculated values are stored in the cache memory 16. The information and the calculated values are controlled by the signal processing unit 13c so as to be freely inputted and outputted.

The signal processing unit 13c includes: a detection unit 17 which detects reproduction commands according to the number of commands set in advance or for a predetermined time and detects a rotation speed of the information recording medium 11; a readout unit 18 which reads out information recorded in the information recordingmedium 11; a measurement unit 19 which measures a predetermined interval of reproduction commands (hereinafter referred to as "command interval information") in reading out information with the readout unit 18; a calculation unit 20 which accumulates the command interval information, which is measured by the measurement unit 19, using the cache memory 16 and calculates a predetermined value on the basis of the accumulated command interval information (hereinafter referred to as accumulated command interval information); a comparison unit 21 which compares the respective pieces of command interval information measured by the measurement unit 19 and a predetermined threshold value and compares the rotation speed detectedby the detection unit 17 and a predetermined reference value; a discard unit 22 which discards the accumulated command interval information, which is stored in the cache memory 16, on the basis of a result of comparison of the comparison unit 21; and a judgment unit 23 which judges whether the rotation speed is to be increased or decreased and instructs the rotation control unit 13a to increase or decrease the rotation speed. The detection unit 17, the readout unit 18, the measurement unit 19, the calculation unit 20, the comparison unit 21, the discard unit 22, and the judgment unit 23 are connected to each other via the bus 10.

In addition, the first drive unit 12 constitutes a driving device of the present invention, the rotation control unit 13a constitutes a rotation control device of the present invention, and the detection unit 17 constitutes a detection device of the present invention.

Further, for example, the readout unit 18 constitutes a readout device of the present invention, the measurement unit 19 constitutes a measurement device of the present invention, and the calculation unit 20 constitutes a calculation device of the present invention.

Moreover, for example, the comparison unit 21 constitutes a comparison device of the present invention, and the judgment unit 23 constitutes a judgment device of the present invention.

Furthermore, for example, the discard unit 22 constitutes a re-measurement unit and a re-measurement device of the present invention because the discard unit 22 discards information stored in the cache memory 16 and performs measurement again.

The readout unit 18 in this embodiment reads out contents information such as voice information and video information recorded in the information recording medium 11 on the basis of the reproduction command and outputs the information to the cache memory 16.

The detection unit 17 in this embodiment detects reproduction commands, which are inputted to the control unit 13, by the number of commands set in advance or for a predetermined time and outputs the respective units that the reproduction commands have been detected.

In addition, the detection unit 17 detects a rotation speed of the information recording medium 11, which rotates when information is read out, and outputs information on the rotation speed to the judgment unit 23.

More specifically, the detection unit 17 detects a rotation speed of the information recording medium 11 and outputs the rotation speed to the judgment unit 23 in order to judge whether or not information recorded in the information recording medium 11 is being read out by the readout unit 18 at a maximum or a minimum speed. Note that, since the information recording medium 11 is rotated by the first drive unit 12, the detection unit 17 of this embodiment detects a rotation speed in this first drive unit 12.

The measurement unit 19 in this embodiment detects a head of the respective reproduction commands inputted to the control unit 13 and measures an interval from a point when readout of information, which is read out according to an arbitrary reproduction command, ends until a point when a reproduction command for information to be read out next is started.

The calculation unit 20 in this embodiment adds the command interval information measured by the measurement unit 19 to the accumulated command interval information stored in the cache memory 16 and stores the added-up accumulated command interval information in the cache memory 16 again.

In addition, the calculation unit 20 acquires the accumulated command interval information stored in the cache memory 16 when the number of commands decided in advance is detected by the detection unit 17 or when the time set in advance is detected, calculates an average interval value by dividing the accumulated command interval information by a sample number, and outputs the average interval value to the comparison unit 21.

The comparison unit 21 in this embodiment compares the interval of the respective command measured by the measurement unit 19 and the predetermined threshold value and outputs a result of the comparison to the discard unit 22, and compares the average interval value calculated by the calculation unit and the predetermined threshold value and outputs a result of the comparison to the judgment unit 23.

In the case in which the interval of the respective commands measured by the measurement unit 19 has continued for the predetermined time or more, the discard unit 22 discards the accumulated command interval information stored in the cache memory 16, that is, resets the accumulated command interval information.

The judgment unit 23 judges whether a rotation speed of the first drive unit 12 is a maximum speed or a minimum speed on the basis of a result of detection.

The judgment unit 23 in this embodiment judges whether the rotation speed is to be increased or decreased on the basis of the result of the comparison by the comparison unit 21 and the result of the judgment on the rotation speed and, in the case in which the rotation speed is to be increased or decreased, instructs the rotation control unit 13a to that effect.

More specifically, in the case in which the average interval value has exceeded the predetermined threshold value in the result of the comparison and in the case in which the rotation speed of the first drive unit 12 is maximum, the judgment unit 23 instructs the rotation control unit 13a to decrease the rotation speed of the information recording medium 11. In the case in which the average interval value is equal to or lower than the predetermined threshold value in the result of the comparison and in the case in which the rotation speed of the first drive unit 12 is the minimum speed, the judgment unit 13 instructs the rotation control unit 13a to increase the rotation speed of the information recording medium 11.

In the case in which a present rotation speed of the information recording medium 11 is the minimum speed, since the rotation speed of the information recording medium 11 cannot be decreased, the judgment unit 23 instructs the rotation control unit 13a to maintain the rotation speed. In the case in which a present rotation speed of the information recording medium 11 is the maximum speed, since the rotation speed of the information recording medium 11 cannot be increased, the judgment unit 23 controls the rotation control unit 13a to maintain the rotation speed.

Next, an example of execution processing of the information reproduction apparatus 2 will be described.

First, the host 4 transfers a reproduction command, which is issued by a control unit (not shown) in response to a readout request of a user, to the drive 6 via the controller 5 and requests readout (reproduction) of information in the information recording medium 11. Subsequently, when the reproduction command is received, the control unit 13 of the drive 6 executes various kinds of processing.

For example, at this point, in the case in which the information recording medium 11 such as a DVD is mounted to the drive 6, the control unit 13 controls to rotate the first drive unit 12, which has a spindle motor, with the rotation control unit 13a, rotates the mounted information recording medium 11, reads out information recorded in the information recording medium 11, and starts reproduction processing.

In addition, the control unit 13 controls the motor 15 with the pickup control unit 13b and reads out information while moving the pickup unit 14 to a predetermined position. Further, the control unit 13 executes readout of information on the basis of a reproduction command in reading out predetermined information from the information recording medium 11 with the signal processing unit 13c. Note that the control unit 13 measures an interval of reproduction commands with the measurement unit 19.

The rotation control unit 13a controls a rotation speed of the first drive unit 12 on the basis of the measured interval of commands on the basis of an instruction of the judgment unit 23 as described above.

Note that the information read out by the pickup unit 14 is stored in the cache memory 16 once by the signal control unit 13c and, then, transferred to the host 4 via the controller 5.

Subsequently, the host 4 transfers the received information to the controller 5 again and, for example, gives an instruction for displaying video with the monitor 7 or reproducing voices with the speaker 8 on the basis of the information to the controller 5.

Subsequently, the controller 5 transfers the received information to the monitor 7 and the speaker 8, respectively, in accordance with the instruction. The monitor 7 and the speaker 8 receive the information. The monitor 7 displays a video screen and the speaker 8 outputs voices.

Here, a state of reading out information from the information recording medium 11 in the information reproduction apparatus 2 will be described with reference to FIGS. 2A to 2C.

Note that FIGS. 2A to 2C show time charts in the case in which information is read out by the host 4 in continuous addresses.

FIG. 2A shows a time chart indicting transfer processing which is ideal, for example, at the time of ripping of data. FIG. 2B shows a time chart in the case in which, for example, AV data is reproduced.

In addition, FIG. 2C shows a time chart in the case in which a readout form of a user has changed to ripping or the like when, for example, readout of AV data is performed in a state in which a rotation speed is low.

CM in the figures indicates a time during which the drive 6 analyzes a reproduction command issued by the host 4. DI in the figures indicates a time during which data requested by the host is transferred to the host 4 via the cache memory 16.

In addition, WAIT in the figures indicates a time during which the data requested by the host 4 cannot be transferred immediately because the data is not stored in the cache memory 16, and the host 4 waits for the data to be read out and prepared for transfer. The interval of commands in this embodiment means an interval from an end of DI in the figures to a beginning of the next CM.

The time chart shown in FIG. 2A indicates a state in which the information, which has been read out and stored in the cache memory 16 on the basis of the reproduction command issued by the host 4, is immediately transferred to the host 4, and transfer processing is performed smoothly.

On the other hand, the time chart shown in FIG. 2B indicates a state in which it takes time until a not-shown cache memory, which is provided in the host 4, becomes free, and a time is required from the end of transfer of information from the drive 6 to the host 4 until issuance of the next reproduction command (an interval of commands is long).

In this case, a readout speed of the drive 6 (a rotation speed of the first drive unit 12) can be decreased to substantially a same degree as a speed required by the host 4 to reproduce information. In other words, vibration, noise, power consumption, and the like of the drive 6 due to unnecessary high-speed rotation can be reduced by decreasing the rotation speed of the information recording medium 11 with the rotation control unit 13a.

In addition, the time chart shown in FIG. 2C indicates a state in which, since a readout speed of the drive 6 is low, in the case of ripping or the like, it takes time to store information in the cache memory 16 of the drive 6, and the host 4 is required to wait until the information is stored in the cache memory 16 of the drive 6.

In other words, in this case, since the information processing of the host 4 is performed immediately, the time from the end of transfer of information from the drive 6 to the host 4 until issuance of the next reproduction command (the interval of commands) is reduced, and efficiency of the readout processing with respect to the transfer processing of the information read out from the information recording medium is low.

In this case, it is necessary to increase a readout speed on the drive side (rotation speed of the first drive unit) to read out the information from the information recording medium such that processing up to reproduction of the information is performed smoothly.

In this embodiment, as shown in FIGS. 2A to 2C, taking notice of the point that intervals of commands at the time when reproduction is executed on the basis of reproduction commands from the host, more specifically, intervals from the end of DI until the start of the next command CM are different, a rotation speed of the information recording medium 11 is controlled by the first drive unit 12 according to the intervals of the commands.

Therefore, in this embodiment, processing from readout of information from the information recording medium until reproduction of the information can be performed efficiently. In addition, for example, by decreasing a rotation speed for reproduction such as AV reproduction which does not require high-speed readout, reduction of vibration, noise, power consumption, and the like of the drive 6 due to unnecessary high-speed rotation can be realized.

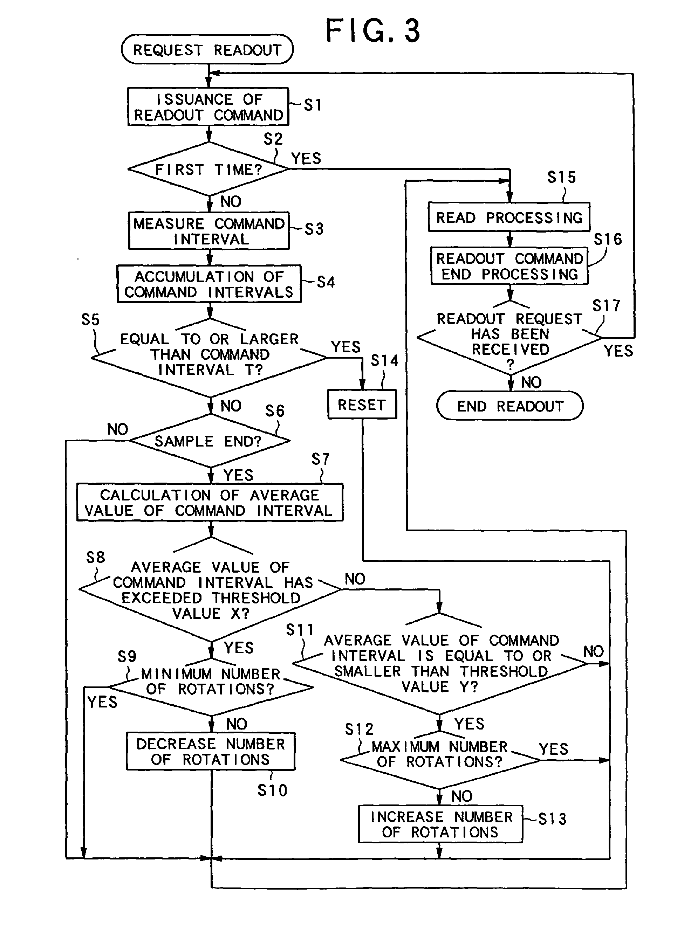

Next, an operation of the rotation control of the information recording medium 11 will be described using the information reproduction apparatus 2 shown in FIG. 1. The operation will be hereinafter described for each step with reference to FIG. 3.

FIG. 3 is a flowchart showing processing which is executed on the basis of a readout request from a user in the first embodiment.

Note that it is assumed that an interval T of commands, a threshold value X, a threshold value Y, a threshold value T, a threshold value A, and a threshold value B used in this embodiment are not limited to those in the embodiment but can be changed.

In step S1 in FIG. 3, the host 4 issues a reproduction command in accordance with a reproduction request for the information recording medium 11, which is an instruction from a user. The first drive unit 12 starts processing for controlling a rotation speed on the basis of the reproduction command.

More specifically, the host 4 issues a reproduction command for reproducing information recorded in the information recording medium 11 on the basis of the reproduction request for the information recording medium 11 from the user and transfers the reproduction command to the drive 6 via the controller 5.

Next, in step S2, the control unit 13 of the drive 6 judges whether or not the inputted reproduction command is a reproduction command which is issued first. If this judgment is affirmed, the control unit 13 proceeds to step S15. If the judgment is denied, the control unit 13 proceeds to step S3.

Note that, if the inputted reproduction command is a reproduction command which is issued first (if the judgment is affirmed), as described later, processing for reading out the information from the information recording medium 11 is performed on the basis of the reproduction command and, then, when the processing of the reproduction command ends, the control unit 13 proceeds to step S3 according to a reproduction command to be issued next.

Next, in step S3, the control unit 13 measures an interval of commands with the measurement unit 19.

In step S3, the control unit 13 detects the reproduction command inputted from the host 4 and measures an interval of commands until the next reproduction command is issued according to step S1.

More specifically, the control unit 13 measures an interval from the end of DI to the beginning of the next CM shown in FIGS. 2A to 2C.

Next, in step S4, the control unit 13 accumulates the command interval information measured with the calculation unit 20.

In this step S4 , the control unit 13 adds the measured command interval to the command interval information already stored in the cache memory 16 to accumulate and stores the accumulated command interval information in the cache memory 16.

Note that, in the case in which accumulated command interval information has not been stored in the cache memory 16, the control unit 13 does not add the measured command interval to any value but stores the command interval information.

Next, in step S5, the control unit 13 judges whether or not the measured command interval is equal to or larger than the threshold value T. If this judgment is affirmed, the control unit 13 proceeds to step S14, where the control unit 13 discards (deletes) the command interval information, and proceeds to step S15. If this judgment is denied, the control unit 13 proceeds to step S6. The threshold value T used in step S5 is, for example, 500 ms.

In step S5, the control unit 13 judges whether or not the measured command interval is effective as data. This is for the purpose of preventing a low average interval value from being calculated to perform undesirable control of a rotation speed in the case in which an interval of commands is significantly increased due to, for example, a change in an instruction of the user.

Notethat, if the measured command interval is effective as data in this judgment, the control unit 13 continues the processing. If the measured command interval is ineffective as data, the control unit 13 discards the command interval information stored in the command interval cache memory 16 and performs measurement of an interval of commands, that is, accumulation of command interval information again.

Next, in step S6, the control unit 13 judges whether or not the predetermined number of commands have been detected according the detected reproduction command. If this judgment is affirmed, the control unit 13 proceeds to step S7. If this judgment is denied, the control unit 13 proceeds to step S15.

In this step S6, more specifically, the control unit 13 judges whether or not the predetermined time has elapsed or whether or not command interval information equivalent to a predetermined sample number could have been acquired. If this judgment is affirmed, the control unit 13 proceeds to step S7. If this judgment is denied, the control unit 13 proceeds to step S15.

Next, in step S7, the control unit 13 calculates an average interval value of commands by dividing the accumulated command interval information by the sample number set in advance, that is, the detected number of commands.

Next, in step S8, the control unit 13 judges, with the comparison unit 21, whether or not the average interval value of commands has exceeded the threshold value X set in advance. If this judgment is affirmed, the control unit 13 proceeds to step S9. If this judgment is denied, the control unit 13 proceeds to step S11. In addition, the threshold value X used in this processing is, for example, 10 ms.

In step S8, it is judged whether or not the command interval value is in a state as shown in FIG. 2B.

Next, in step S9, the control unit 13 judges, with the judgment unit 23, whether or not a rotation speed is a minimum speed. If this judgment is affirmed, the control unit 13 proceeds to step S15. If this judgment is denied, the control unit 13 proceeds to step S10.

In step S9, the control unit 13 checks a rotation speed of the first drive unit 12 and judges whether or not the rotation speed of the information recording medium 11 can be decreased.

Next, in step S10, the control unit 13 controls the first drive unit 12 to perform processing for decreasing the rotation speed of the information recording medium 11 to a predetermined value.

Readout of information is processed at a low speed by decreasing the rotation speed of the first drive unit 12 in this way, whereby vibration, noise, and the like of the drive 6 due to unnecessary high-speed rotation can be reduced.

When the control unit 13 has judged in step S8 that the average interval value of commands is a value lower than the threshold value X, in step S11, the control unit 13 judges, with the judgment unit 23, whether or not the average interval value of commands is equal to or lower than the threshold value Y. If this judgment is affirmed, the control unit 13 proceeds to step S12. If this judgment is denied, the control unit 13 proceeds to step S15. The threshold value Y used in this processing is, for example, 2 ms.

In step S11, it is judged whether or not the interval of commands is in a state as shown in FIG. 2C.

Next, in step S12, the control unit 13 causes the judgment unit 23 to detect a rotation speed of the first drive unit 12 and judges whether or not the rotation speed is a maximum speed. If this judgment is affirmed, the control unit 13 proceeds to step S15. If this judgment is denied, the control unit 13 proceeds to step S13.

In step S12, the control unit 13 checks the rotation speed of the first drive unit 12 and judges whether or not the rotation speed of the information recording medium 11 can be increased.

Next, in step S13, the control unit 13 controls the rotation control unit 13a to performprocessing for increasing the rotation speed of the first drive unit 12 to a predetermined value.

As described above, in this embodiment, the rotation speed of the first drive unit 12 is increased to process transfer of the information, which has been read out from the information recording medium 11, to the host 4 at a high-speed, whereby the information is transferred to the host 4 at a high speed. Thus, the host 4 is not required to wait until the information is stored in the cache memory 16 on the drive 6 side.

In step S14, the control unit 13 discards, with the discard unit 22, the command interval information stored in the cache memory 16.

In step S14 , the control unit 13 judges that the measured interval of commands is ineffective as data, and discards the command interval information stored in the cache memory 16 and performs the measurement of an interval of commands again.

In step S15, the control unit 13 performs, with the readout unit 18, processing for reading out information based upon the reproduction command from the information recording medium 11 via the pickup control unit 13b.

In step S15, the read-out information is transferred to the host 4 via the controller 5. In addition, the host 4 outputs the information read out via the controller 5 to the monitor 7 and the speaker 8.

Next, in step S16, the control unit 13 performs, with the measurement unit 19, command end processing for the reproduction command issued in step S1.

Next, in step S17, the control unit 13 judges whether or not the next readout request has been sent by the user. If this judgment is affirmed, that is, if the next reproduction command issued from the host 4, the control unit 13 returns to step S1. In addition, if this judgment is denied, the control unit 13 ends the reproduction processing for information based upon the reproduction request for the information recording medium 11 from the user.

As described above, the information reproduction apparatus 2 in this embodiment includes: the first drive unit 12 which causes the information recording medium 11 to rotate in order to read out predetermined information from the information recording medium 11; a command generation unit which generates a command on the basis of an instruction from a user in reading out the predetermined information from the information recording medium 11; the readout unit 18 which reads out the information on the basis of the reproduction command; the measurement unit 19 which measures an interval of commands when the information is read out by the readout unit 18; and the rotation control unit 13a which controls a rotation speed of the first drive unit 12 on the basis of the interval of commands measured by the measurement unit 19.

The information reproduction apparatus 2 may include: the calculation unit 20 for calculating an average value of an interval of commands on the basis of plural intervals of commands which are generated according to at least a predetermined time or a predetermined number of times; and the rotation control unit 13a for controlling a rotation speed of the first drive unit 12 on the basis of the average value of intervals of commands calculated by the calculation unit 20.

The information reproduction apparatus 2 may include the comparison unit 21 which compares the calculated average value of an interval of commands with a predetermined threshold value. The rotation control unit 13a may be adapted to perform control so as to decrease the rotation speed of the first drive unit 12 in the case in which the average value of an interval of commands has exceeded the predetermined threshold value as a result of the comparison by the comparison unit 21.

The rotation control unit 13a may be adapted to perform control so as to increase the rotation speed of the first drive unit 12 in the case in which the average value of an interval of commands is equal to or lower than the predetermined threshold value as a result of the comparison by the comparison unit 21.

The information reproduction apparatus 2 may include a re-measurement unit for re-measuring an interval of commands in the case in which the interval of commands has exceeded the predetermined time.

As described above, according to this embodiment, a command interval and an average value of a command interval is measured and calculated on the basis of a reproduction command, which is issued from the host 4 in accordance with a reproduction request for the information recording medium 11 from a user, and a rotation speed of the first drive unit 12 (rotation speed of the information recording medium 11) is controlled on the basis of the measured interval of commands and average value of a command interval. Therefore, the rotation speed of the first drive unit 12 can be controlled in accordance with a difference of a readout form of the user.

For example, as shown in FIG. 2B, in the case in which AV data is reproduced, processing for decreasing a readout speed (rotation speed) on the drive side is performed.

As a result, the rotation speed of the first drive unit 12 is made substantially equal to a speed required for the host side to reproduce information, whereby vibration, noise, and the like of the drive 6 due to unnecessary high-speed rotation can be reduced.

For example, as shown in FIG. 2C, in the case in which processing for reading out AV data is performed at a low rotation speed, if a readout form of a user is changed to ripping or the like, processing for increasing a readout speed (rotation speed) on a drive side is performed.

As a result, since a host side is not required to wait until information is stored in a cache memory on the drive side, processing from readout of information from an information recording medium to reproduction of the information can be performed efficiently.

In addition, in this embodiment, an average value of a command interval is calculated by the above described information reproduction apparatus 2 on the basis of a reproduction command, which is issued by the host 4, to control a rotation speed of the information recording medium 11 on the basis of the average value of a command interval. However, it is also possible that a computer and a recording medium is provided in the information reproduction apparatus 2 having an information recording medium for storing voice information, video information, and the like, a program for measuring a command interval and a program for controlling a rotation speed of the information recording medium 11 on the basis of the command interval are stored in this recording medium, and the respective control programs are read by the computer, whereby the same rotation control as described above is performed.

(Second embodiment)

Next, a second embodiment will be described using the information reproduction apparatus 2 shown in FIG. 1.
This embodiment has a characteristic in that, instead of performing rotation control of an information recording medium 11 on the basis of an average value of an interval of plural reproduction commands calculated according to the commands in the first embodiment, rotation control of the information recording medium 11 is performed by judging whether or not an interval of reproduction commands satisfies a predetermined reference value continuously for a predetermined time or a predetermined number of times or more, that is, continuity of a command interval.
First, a structure of this embodiment will be described. Note that, descriptions about components in this structure common to the first embodiment will be omitted. In addition, the command interval measured by a measurement unit 19 and continuity information are stored in a cache memory 16 of this embodiment.
A signal processing unit 13c of the information reproduction apparatus 2 of this embodiment includes: a readout unit 18 which reads out information recorded in the information recording medium 11; a detection unit 17 which detects a rotation speed of a first drive unit 12 in reading out information with the readout unit 18 and detects the fact that a reproduction command, which is issued on the basis of a reproduction request from a user, is continuing; a comparison unit 21 which compares the rotation speed of the first drive unit 12 detected by the detection unit 17 with a predetermined reference value and compares a predetermined threshold value and the command interval measured by the measurement unit 19; and a judgment unit 23 which judges whether the rotation speed is to be increased or decreased on the basis of a result of the comparison of the rotation speeds compared by the comparison unit 21 and instructs a rotation control unit 13a to increase or decrease the rotation speed; and a discard unit 22 which discard the command interval, which is measured by the measurement unit 19, stored in the cache memory 16 on the basis of the result of the comparison.
The readout unit 18 of this embodiment reads out contents information such as voice information or video information recorded in the information recording medium 11 on the basis of an reproduction command and outputs the information to the cache memory 16.
The detection unit 17 of this embodiment detects a rotation speed of an information recording medium, which rotates when information is read out, and outputs information on the rotation speed to the comparison unit 21 as a result of the detection.
More specifically, in order to judge whether or not the information recorded in the information recording medium 11 is being read out by the readout unit 18 in high-speed rotation, the detection unit 17 detects a rotation speed of the information recording medium 11, that is, a rotation speed in the first drive unit 12.
In addition, the detection unit 17 detects, as continuation information, the fact that the reproduction command inputted to the control unit 13 has continued by the number of commands set in advance or for a predetermined time and outputs the continuation information to the judgment unit 23. More specifically, for example, the detection unit 17 detects, as continuation information, the fact that the reproduction command has been issued one-hundred times continuously and outputs the continuation information to the judgment unit 23.
The comparison unit 21 of this embodiment compares the rotation speed detected by the detection unit 17 with a predetermined reference value and outputs a result of the comparison to the judgment unit 23.
In addition, the comparison unit 21 stores plural threshold values X, Y and T in the inside thereof, selects one of these threshold values on the basis of a rotation speed to be detected by the detection unit 17 , compares the selected threshold value with a command interval, and outputs a result of the comparison to the judgment unit 23.
More specifically, in the case in which a rotation speed to be judged by the judgment unit 23 described later is judged as high-speed rotation, the comparison unit 21 selects the threshold values X and T. In addition, in the case in which a rotation speed to be detected by the detection unit 17 is detected as low-speed rotation, the comparison unit 21 selects the threshold value Y. Moreover, the comparison unit 21 compares the selected threshold value with the command interval.
The judgment unit 23 of this embodiment judges, as rotation information, whether a rotation speed of the information recording medium 11 is high-speed rotation or low-speed rotation on the basis of a result of comparison of rotations speeds and outputs a result of the judgment to the comparison unit 21.

In addition, the judgment unit 23 judges whether or not the continuation information outputted by the detection unit 17 has been inputted and, in the case in which the continuation information has been detected by the judgment unit 23, judges whether the rotation speed of the first drive unit 12 is to be increased or decreased and instructs the rotation control unit 13a to that effect. Further, in the case in which the continuation information outputted by the detection unit 17 has not been detected, the judgment unit 23 instructs the rotation control unit 13a to maintain the rotation speed of the first drive unit 12 without change.

In the case in which the command interval measured by the measurement unit 19 does not satisfy a predetermined value, the discard unit 22 of this embodiment discards the command interval stored in the cache memory 16 on the basis of a result of comparison by the comparison unit 21.

More specifically, in order to perform measurement again in the same manner as the first embodiment, if the command interval to be compared by the comparison unit 21 is equal to or larger than the threshold value X and equal to or larger than the threshold value T, the discard unit 22 discards the continuation information detected by the detection unit 17. In addition, if the command interval to be compared by the comparison unit 21 is equal to or smaller than the threshold value Y, the discard unit 22 discards the continuation information detected by the detection unit 17.

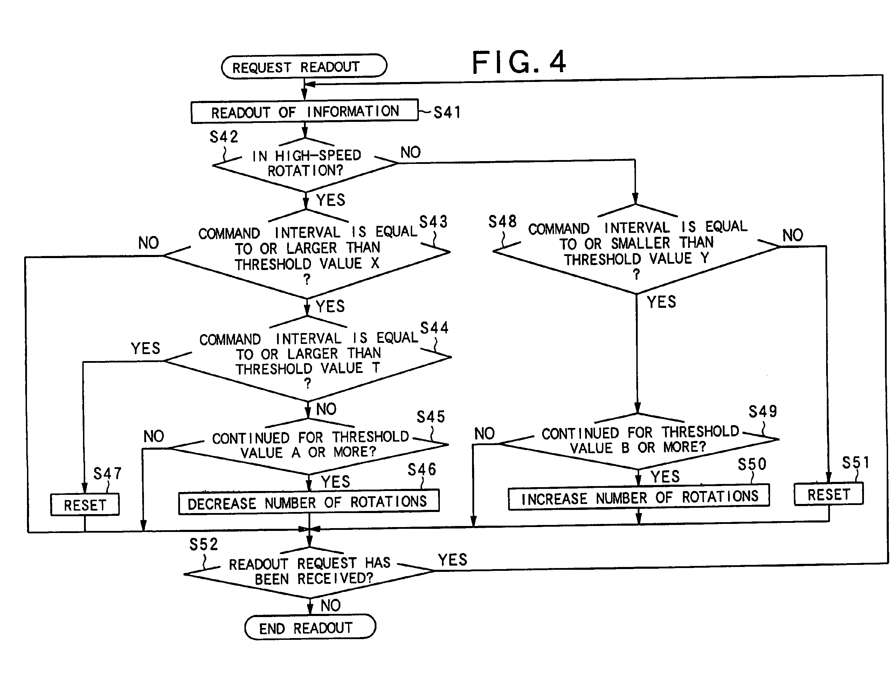

Next, a control operation for a rotation speed of the information recording medium 11 will be described using the information reproduction apparatus 2 shown in FIG. 1. The control operation will be described for each step with reference to FIG. 4.

Note that FIG. 4 is a flowchart showingprocessingwhich is executed on the basis of a readout request from a user in the second embodiment.

In addition, it is assumed that, a threshold value X, a threshold value Y, a threshold value T, a threshold value A, and a threshold value B used in this embodiment are not limited to those in the embodiment but can be changed.

In step S41 in FIG. 4, the control unit 13 causes the first drive unit 12 to control a rotation speed on the basis of a reproduction command, which is issued by the host 4 in accordance with a reproduction request for the information recording medium 11 from a user, and reads out information, which is recorded in the information recording medium 11, from the information recording medium 11.

Note that the information read out in step S41 is transferred to the host 4 via the controller 5, and the host 4 outputs the information read out via the controller 5 to the monitor 7 and the speaker 8.

Next, in step S42, the control unit 13 judges, with the judgment unit 23, whether or not a rotation speed of the first drive unit is high-speed rotation. If this judgment is affirmed, the control unit 13 proceeds to step S43. If this judgment is denied, the control unit 13 proceeds to step S48.

More specifically, the detection unit 17 detects a rotation speed of the first drive unit 12 and outputs a result of the detection to the comparison unit 21. The comparison unit 21 compares the detected rotation speed by the result of the detection with a value (rotation speed) set in advance and outputs a result of the comparison to the judgment unit 23. The judgment unit 23 judges whether readout is being performed by high-speed rotation or low-speed rotation on the basis of the result of the comparison.

Next, in step S43, the control unit 13 judges, with the comparison unit 21, whether or not an interval of commands is equal to or larger than the threshold value X set in advance. If this judgment is affirmed, the control unit 13 proceeds to step S44. If this judgment is denied, the control unit 13 proceeds to step S52. The threshold value X used in step S43 is, for example, 10 ms.

Note that, in the case in which the interval of commands is equal to or smaller than the threshold value X, the judgment unit 23 instructs the rotation control unit 13a to maintain the rotation speed.

Next, in step S44, the control unit 13 judges, with the comparison unit 21, whether or not the interval of commands is equal to or larger than the threshold value T set in advance. If this judgment is affirmed, the control unit 13 proceeds to step S47. If this judgment is denied, the control unit 13 proceeds to step S45. The threshold value T used in step S44 is, for example 500 ms.

Note that, in steps S42 to S44, it is judged whether or not the interval of commands is in a state as shown in FIG. 2B. More specifically, it is judged whether or not the command interval is in a predetermined range.

Next, in step S45, the control unit 13 judges, with the judgment unit 23, whether or not the interval of commands has continued by the number of times equal to or larger than the threshold value A set in advance. If this judgment is affirmed, the control unit 13 proceeds to step S46. If this judgment is denied, the control unit 13 proceeds to step S52. Note that the threshold value A used in step S45 is the number of times, time, or the like of commands, and it is possible to change the threshold value. For example, the threshold value is 100 times.

More specifically, the judgment unit 23 judges whether or not continuation information has been inputted from the detection unit 17. If the continuation information has not been inputted, the judgment unit 23 instructs a rotation control unit to maintain the rotation speed.

Next, in step S46, the control unit 13 controls the first drive unit 12 to perform processing for decreasing the rotation speed of the information recording medium to a predetermined value.

Readout is processed at a low speed by decreasing the rotation speed of the first drive unit 12 in this way, whereby vibration, noise, and the like of the drive 6 due to unnecessary high-speed rotation can be reduced. When the control unit 13 judges in step S44, with the comparison unit 21, that the interval of commands is a value lower than the threshold value T, in step S47, the discard unit 22 discards the command interval information stored in the cache memory 16.

More specifically, in the case in which the interval of commands is equal to or larger than the threshold value T, the comparison unit 21 outputs a result of the comparison to the discard unit 22. The discard unit 22 discards the continuation information on the basis of the result of the comparison. If a reproduction request for the information recording medium is received from the user again (step S52), the control unit 13 returns to step S41 and performs reproduction processing for the information recording medium 11 in accordance with the reproduction request of the user.

In step S48, the control unit 13 judges, with the comparison unit 21, whether or not the interval of commands is equal to or smaller than the threshold value Y set in advance. If this judgment is affirmed, the control unit 13 proceeds to step S49. If this judgment is denied, the control unit 13 proceeds to step S51. The threshold value Y used in step S48 is, for example, 2 ms.

In step S48, it is judged whether or not the interval of commands is in a state as shown in FIG. 2C.

Next, in step S49, the control unit 13 judges, with the judgment unit 23, whether or not the interval of commands has continued for a time equal to or larger than the threshold value B set in advance. If this judgment is affirmed, the control unit 13 proceeds to step S50. If this judgment is denied, the control unit 13 maintains the rotation of the first drive unit 12 and proceeds to step S52. The threshold value B used in step S49 is the number of times, time, or the like of commands, and it is possible to change the threshold value. For example, the threshold value is 3 sec.

More specifically, the judgment unit 23 judges whether or not continuation information has been inputted from the detection unit 17. If the continuation information has not been inputted, the judgment unit 23 instructs the rotation control unit 13a to maintain the rotation speed.

Next, in step S50, the control unit 13 controls the first drive unit 12 to perform processing for increasing the rotation speed of the information recording medium 11 to a predetermined value.

The rotation speed of the first drive unit 12 is increased to process at a high speed transfer of the information, which has been read out from the information recording medium 11, to the host 4 side in this way, whereby information is transferred to the host 4 side at a high speed. Thus, the host 4 side is not required to wait for the information to be stored in the cache memory 16 on the drive 6 side.

When the control unit 13 judges, with the comparison unit 21, in step S48 that the interval of commands is a value exceeding the threshold value Y, in step S51, the discard unit 22 discards the continuation information stored in the cache memory 16.

More specifically, in the case in which the interval of commands has exceeded the threshold value Y, the comparison unit 21 outputs a result of the comparison to the discard unit 22. The discard unit discards the command interval on the basis of the result of the comparison. If a reproduction request for the information recording medium 11 is sent from the user again (step S52), the control unit 13 returns to step S41 and performs reproduction processing for the information recording medium 11 in accordance with the reproduction request of the user.

In step S52, the control unit 13 judges whether or not the next readout request has been sent from the user. More specifically, the control unit 13 judges whether or not the next reproduction command has been inputted. If this judgment is affirmed, the control unit 13 returns to step S41. In addition, if this judgment is denied, the control unit 13 ends the reproduction processing based upon the reproduction request from the user.

As described above, the information reproduction apparatus 2 in this embodiment includes: the first drive unit 12 which causes the information recording medium 11 to rotate in order to read out predetermined information from the information recording medium 11; a command generation unit which generates a command on the basis of an instruction from a user in reading out the predetermined information from the information recording medium 11; the readout unit 18 which reads out the information on the basis of the generated command; the measurement unit 19 which measures an interval of commands when the information is read out by the readout unit 18; and the rotation control unit 13a which controls a rotation speed of the first drive unit 12 on the basis of the command interval measured by the measurement unit 19.

It is also possible that the information reproduction unit 12 includes: the judgment unit 23 which judges whether or not a rotation speed of the first drive unit 12 has exceeded a predetermined reference value; and the comparison unit 21 which compares a command interval with a predetermined threshold value, and the rotation control unit 13a controls the rotation speed of the first drive unit 12 on the basis of a result of the judgment by the judgment unit 23 and a result of the comparison by the comparison unit 21.

It is also possible that the judgment unit 23 judges whether or not measurement of a command interval has been performed continuously for a time or by the number of times equal to ore more than a threshold value defined by at least one of a predetermined time and a predetermined number of times, and the rotation control unit 13a controls the rotation speed of the first drive unit 12 on the basis of a result of the judgment by the judgment unit 23 and a result of the comparison by the comparison unit 21.

It is also possible that, in the case in which a result of the judgment by the judgment unit 23 has exceeded a predetermined rotation speed, a result of the comparison by the comparison unit has satisfied a threshold value, and measurement of a command interval performed by the measurement unit 19 has been performed continuously for a time or by the number of times equal to or larger than a threshold value which is defined by at least one of a predetermined time and a predetermined number of times, the information reproduction apparatus 2 in this embodiment performs, with the rotation control unit 13a, control for decreasing the number of rotations of the first drive unit 12.

It is also possible that, in the case in which a result of the judgment by the judgment unit 23 is equal to or lower than a predetermined rotation speed, a result of the comparison by the comparison unit 21 has satisfied a threshold value, and measurement of a command interval performed by the measurement unit 19 has been performed continuously for a time or by the number of times equal to or larger than a threshold value which is defined by at least one of a predetermined time and a predetermined number of times, the information reproduction apparatus 2 in this embodiment performs, with the rotation control unit 13a, control for increasing the number of rotations of the first drive unit 12.

In this way, according to this embodiment, a command interval is detected on the basis of a reproduction command, which is issued by the host 4 in accordance with a reproduction request for the information recording medium 11 from a user and, if the command interval has continued for a fixed time of a fixed number of times within a range of predetermined values, a rotation speed of the first drive unit 12 (a rotation speed of the information recording medium 11) on the basis of the command interval. Therefore, the number of rotations of the first drive unit 12 can be controlled in accordance with a difference of a readout form of the user.

More specifically, in this embodiment, in the case in which a result of the judgment by the judgment unit 23 has exceeded a predetermined number of rotations, a result of the comparison by the comparison unit 21 is equal to or larger than a threshold value, and measurement of a command interval performed by the measurement unit 19 has been performed continuously for a time or by the number of times equal to or larger than a threshold value which is defined by at least one of a predetermined time and a predetermined number of times, for example, as shown in FIG. 2B, it is judges that reproduction of AV data is performed, and processing for decreasing a readout speed (number of rotations) on the drive side is performed.

As a result, by decreasing the number of rotations, vibration, noise, and the like of the drive 6 due to unnecessary high-speed rotation can be reduced.

In addition, in the case inwhich a result of the judgment by the judgment unit 23 is equal to or smaller than a predetermined number of rotations, a result of the comparison by the comparison unit 21 is equal to or smaller than a threshold value, and measurement of a command interval performed by the measurement unit 19 has been performed continuously for a time or by the number of times equal to or larger than a threshold value which is defined by at least one of a predetermined time and a predetermined number of times, for example, as shown in FIG. 2C, in the case in which processing for reading out AV data is processed at the low number of rotations, it is judges that a readout form of a user has changed to ripping or the like, and processing for increasing a readout speed (number of rotations) on the drive side is performed.

As a result, a host side is not required to wait for information to be stored in a cache memory on the drive side, processing from readout of information from an information recording medium to reproduction of the information can be performed efficiently.


(Third embodiment)

Next, a third embodiment will be described using the information reproduction apparatus 2 shown in FIG. 1.

This embodiment has a characteristic in that, instead of performing rotation control of an information recording medium 11 on the basis of an average value of an interval of the reproduction commands which is calculated according to plural reproduction commands in the first embodiment, rotation control of the information recording medium 11 is performed on the basis of a state of use of a cache memory 16.

First, a structure of this embodimentwill be described. Note that, descriptions about components in another structure common to the first and the second embodiments will be omitted.

A cache use rate and an average value of the cache use rate, which will be described later, are stored in the cache memory 16. The use rate and the average value are controlled by a signal processing unit 13c so as to be freely outputted and inputted. In addition, information read out from the information recording medium 11 is temporarily stored in the cache memory 16.

The signal processing unit 13c of this embodiment includes: a readout unit 18 which reads out information recorded in the information recording medium 11; a detection unit 17 which detects a reproduction command by the number of commands set in advance or for a predetermined time and detects a change in positional information indicating a state of fluctuation of an amount of information stored in the cache memory 16; a measurement unit 19 which measures a use rate of a cache memory (hereinafter referred to as "cache use rate") in reading out information with the readout unit 18; a calculation unit 20 which accumulates measured cache use rates and calculates a use rate as the accumulated cache use rate (hereinafter referred to as "accumulated cache use rate"); a comparison unit 21 which compares each cache use ratemeasured by the measurement unit 19 with a predetermined threshold value; a discard unit 22 which performs discard of the accumulated cache use rate stored in the cache memory 16; and a judgment unit 23 which judges whether a rotation speed is to be increased or decreased on the basis of the value calculated by the calculation unit 20 and judges whether or not the positional information detected by the detection unit 17 has changed. The detection unit 17, the readout unit 18, the measurement unit 19, the calculation unit 20, the comparison unit 21, the discard unit 22, and the judgment unit 23 are connected via a bus 10.

The readout unit 18 in this embodiment reads out contents information such as voice information or video information recorded in the information recording medium 11 on the basis of a reproduction command and outputs the information to the cache memory 16.

The detection unit 17 in this embodiment detects the reproduction command inputted to the pickup control unit 13b by the number of commands set in advance or for a predetermined time and outputs the respective units that the reproduction command has been detected.

In addition, at the time when the information read out by the readout unit 18 is inputted to the cache memory 16, the detection unit 17 detects an end of the information as positional information and outputs a result of the detection to the judgment unit 23.

More specifically, the detection unit 17 detects an end bit of the information to be stored in the cache memory 16 as positional information.

More specifically, the detection unit 17 monitors the end bit of the information to be stored in the cache memory 16 and detects a change in the end bit which fluctuates due to input or output of the information.

In addition, the detection unit 17 detects a rotation speed of the information recording medium 11, which rotates when information is read out, and outputs information on the rotation speed to the judgment unit 23.

The measurement unit 19 in this embodiment measures a ratio occupied by information, which corresponds to one reproduction command read out by the readout unit 18, with respect to a storage area for information recording medium readout of the cache memory 16 as a cache use rate.

More specifically, the measurement unit 19 measures positional information to be detected by the detection unit 17, for example in a storage area of the cache memory 16. The calculation unit 20 can calculate an amount of information from the measured position and calculate the ratio occupied by the information with respect to the storage area for information recording medium readout of the cache memory 16 by dividing the amount of information with an amount of storage of the cache memory 16 which can be used for information recording medium readout. The calculated value is outputted to the measurement unit 19 as a cache use rate. In addition, the measurement unit 19 stores the cache use rate in the cache memory 16.

The calculation unit 20 in this embodiment adds the cache use rate measured by the measurement unit 19 and the accumulated cache use rate stored in the cache memory 16 and stores the added-up accumulated cache use rate in the cache memory 16 again.

In addition, when the number of commands decided in advance is detected by the detection unit 17 or when the time set in advance is detected by the detection unit 17, the calculation unit 20 acquires the accumulated cache use rate stored in the cache memory 16, calculates an average value of the cache use rate by dividing the accumulated cache use rate with a sample number, and outputs the average value of the cache use rate to the comparison unit 20.

The comparison unit 21 in this embodiment compares respective cache use rate measured by the measurement unit 19 and a predetermined threshold value and outputs a result of the comparison to the judgment unit 23.

When information is inputted to the cache memory 16 or information is transferred from the cache memory 16 to the host 4, the judgment unit 23 in this embodiment judges whether or not positional information has changed and also judges whether or not a state in which the positional information has not changed has continued for a predetermined time. If the state in which the positional information has not changed has continued for the predetermined time, the judgment unit 23 outputs the discard unit 22 to that effect.

In addition, the judgment unit 23 judges whether a rotation speed of the first drive unit 12 is a maximum speed or a minimum speed on the basis of a result of the detection.

More specifically, the judgment unit 23 judges whether the rotation speed is to be increased or decreased on the basis of the result of the comparison by the comparison unit 21 and the result of the judgment on the rotation speed and, if the rotation speed is to be increased or decreased, instructs the rotation control unit 13a to that effect.

More specifically, in the case in which the average value of the cache use rate is equal to or lower than the predetermined threshold value and in the case in which the rotation speed of the first'drive unit 12 is not the minimum speed in the result of the comparison, the judgment unit 23 instructs the rotation control unit 13a to decrease the rotation speed of the information recording medium 11. In the case in which the average value of the cache use rate has exceeded the predetermined threshold value and in the case in which the rotation speed of the first drive unit 12 is not the maximum speed in the result of the comparison, the judgment unit 23 instructs the rotation control unit 13a to increase the rotation speed of the information recording medium 11.

In the case in which a present rotation speed of the information recording medium 11 is the minimum speed, since the rotation speed of the information recording medium 11 cannot be decreased, the judgment unit 23 instructs the rotation control unit 13a to maintain the rotation speed. In the case in which the present rotation speed of the information recording medium 11 is the maximum speed, since the rotation speed of the information recording medium 11 cannot be increased, the judgment unit 23 instructs the rotation control unit 13a to maintain the rotation speed.

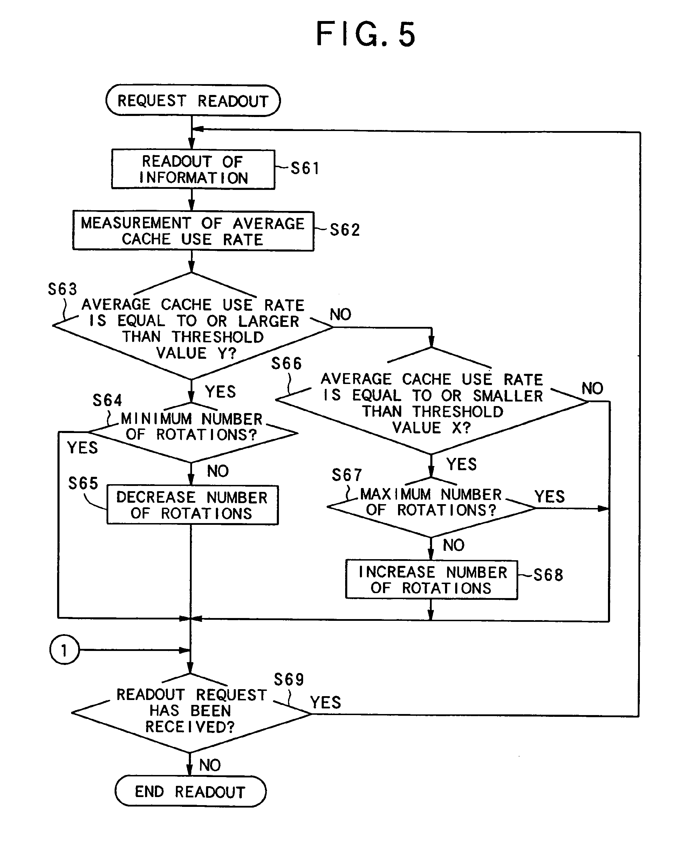

Next, an operation of rotation control for the information recording medium 11 will be described using the information reproduction apparatus 2 shown in FIG. 1. The operation will be hereinafter described for each step with reference to FIGS. 5 to 7.

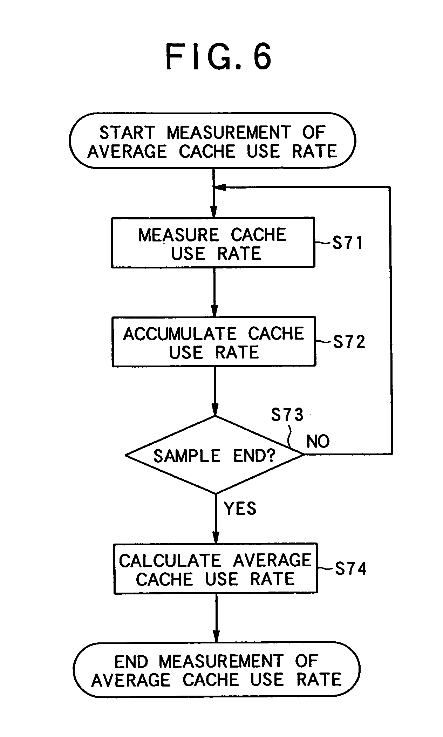

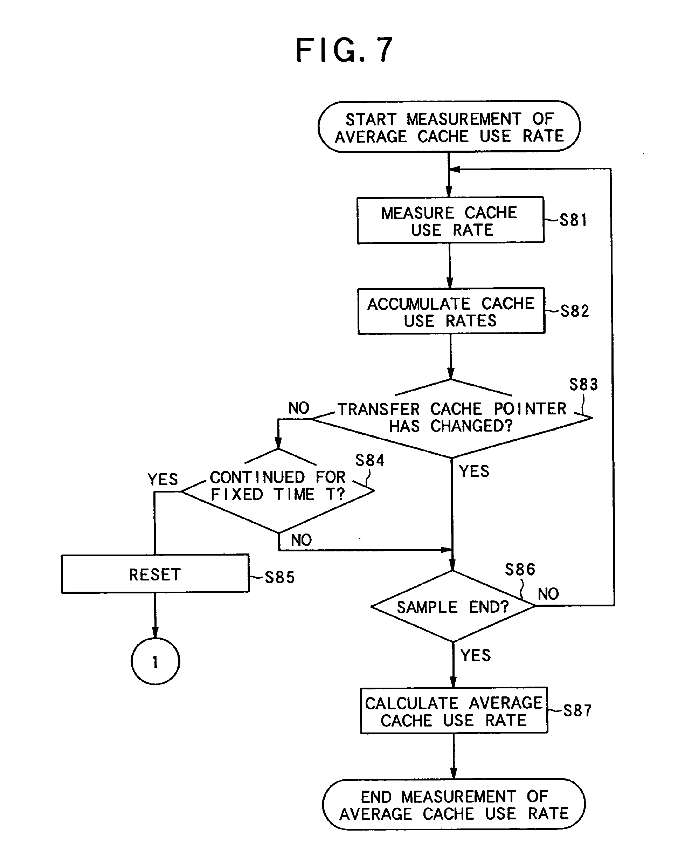

FIG. 5 is a flowchart showing processing which is executed on the basis of a readout request from a user in the thirdembodiment. FIG.6isaflowchart showing processing for calculating an average use rate of a cache. In addition, FIG. 7 is a flowchart showing processing for calculating an average value of a cache use rate in other embodiments.

Note that it is assumed that a threshold value X, a threshold value Y, and a fixed time T used in this embodiment are not limited to those in the embodiment but can be changed.

In step S61 of FIG. 5, the control unit 13 controls, with the rotation control unit 13a, a rotation speed of the first drive unit 12 on the basis of a reproduction command which is issued from the host 4 in accordance with a reproduction request for the information recording medium 11 from the user. In addition, the control unit 13 reads out information, which is recorded in the information recording medium 11 , from the information recording medium 11 with the readout unit 18.

Note that the information read out in step S61 is transferred to the host 4 via the controller 5, and the host 4 outputs the read-out information to the monitor 7 and the speaker 8 via the controller 5.

Next, in step S62, in reading out the information, as described above, the control unit 13 detects plural reproduction commands with the measurement unit 19, measures a cache use rate of the cache memory 16 definedby the respective reproduction command, and acquires the cache use rate for a predetermined time or by a predetermined sample number to calculate an average value of the cache use rate.

Here, an execution sub-program (FIG. 6) , which executes processing for calculating the average value of the cache use rate, is started, and the control unit 13 proceeds to step S71.

In step S71 in FIG. 6, the control unit 13 measures a cache use rate with the measurement unit 19.

Note that, more specifically, the measurement of acache use rate is measurement of a ratio occupied by stored information with respect to a storage area for information recordingmedium readout of the cache memory 16 having a storage area.

In step S71, the control unit 13 stores the measured cache use rate in the cache memory 16.

Next, in step S72 , the control unit 13 accumulates cache use rates measured by the calculation unit 20 and stores a value of the accumulated cache use rate in the cache memory 16 as a cache use rate.

Next, in step S73, the control unit 13 judges whether or not cache use rates equivalent to a sample number for finding the average value of the cache use rate stored in the cache memory 16 have been acquired. If this judgment is affirmed, the control unit 13 proceeds to step S74. If this judgment is denied, the control unit 13 returns to step S71 and continues the processing for measuring a cache use rate. Note that this sample number may be the number of times or a predetermined time.

Next, in step S74, the control unit 13 calculates, with the calculation unit 20, an average value of the cache use rate by dividing the cache use rate stored in the cache memory 16 with the sample number, ends the execution sub-program, and proceeds to step S63.

Next, in step S63, the control unit 13 compares the average value of the cache use rate with the threshold value Y set in advance with the comparison unit 21 and judges whether or not the average value has exceeded the threshold value Y set in advance with the judgment unit 23. If this judgment is affirmed, the control unit 13 proceeds to step S64. If this judgment is denied, the control unit 13 proceeds to step S66. In addition, the threshold value Y used in step S63 is, for example, 90%.

Next, in step S64, the control unit 13 judges whether or not a rotation speed is a minimum speed with the judgment unit 23. If this judgment is affirmed, the control unit 13 proceeds to step S69. If this judgment is denied, the control unit 13 proceeds to step S65.

In step S64, with the judgment unit 23, the control unit 13 checks a rotation speed of the first drive unit 12 and judges whether or not the number of rotations of the information recording medium 11 can be decreased.

Next, in step S65, with the judgment unit 23, the control unit 13 instructs the rotation control unit 13a to decrease the rotation speed of the first drive unit 12 to a predetermined value.

Readout is processed as a low speed by decreasing the rotation speed of the first drive unit 12 in this way, whereby vibration, noise, and the like of the drive 6 due to unnecessary high-speed rotation can be reduced.

When the control unit 13 judges in step S63 that the average value of the cache use rate is not a value exceeding the threshold value Y, in step S66, the control unit 13 judges whether or not the average value of the cache use rate is equal to or lower than the threshold value X. If this judgment is affirmed, the control unit 13 proceeds to step S67. If this judgment is denied, the control unit 13 proceeds to step S69. The threshold value X used in step S66 is, for example, 10%.

Next, in step S67, the control unit 13 judges whether or not the rotation speed is a maximum speed with the judgment unit 23. If this judgment is affirmed, the control unit 13 proceeds to step S69. If this judgment is denied, the control unit 13 proceeds to step S68.

Next, in step S68, with the judgment unit 23, the control unit 13 instructs the rotation control unit 13a to increase the rotation speed of the first drive unit 12 to a predetermined value.

Transfer of the information to the host 4 read out from the information recording medium 11 is processed at a high speed by increasing the rotation speed of the first drive unit 12 in this way, the information is transferred to the host 4 at a high speed. Thus, an input rate on a drive side becomes higher than an output rate on a host side, and the host 4 is not required to wait for the information to be stored in the cache memory 16 on the drive 6 side.

Next, in step S69, the control unit 13 judges whether or not the next reproduction request has been sent from the user. More specifically, the control unit 13 judges whether or not the next reproduction command has been inputted. If this judgment is affirmed, the control unit 13 returns to step S61. If this judgment is denied, the control unit 13 ends the reproduction processing based upon the reproduction request from the user.

FIG. 7 shows another embodiment of the processing for calculating an average value of a cache use rate.

In step S81 in FIG. 7, the control unit 13 measures a cache use rate with the measurement unit 19 and stores the cache use rate in the cache memory 16.

Next, in step S82, the control unit 13 accumulates use rates of a cache measured by the calculation unit 20 and stores the value in the cache memory 16 as a cache use rate.

Next, in step S83, the control unit 13 detects positional information with the detection unit 17 and judges, with the judgment unit 23, whether or not the positional information has changed. If this judgment is affirmed, the control unit 13 proceeds to step S86. If this judgment is denied, the control unit 13 proceeds to step S84.

Next, in step S84, the control unit 13 judges, with the judgment unit 23, whether or not a state in which the positional information has not changed has continued for a fixed time T. If this judgment is affirmed, the control unit 13 proceeds to step S85. If this judgment is denied, the control unit 13 proceeds to step S86.

Next, in step S85, the control unit 13 discards the average rate of the cache use rate stored in the cache memory 16 with the discard unit 22 and returns to step S69. If a reproduction request for the information recording medium 11 is sent from the user again, the control unit 13 returns to step S61 and performs reproduction processing for the information recording medium 11 in accordance with the reproduction request of the user.

In step S85, the control unit 13 judges, with the judgment unit 23, whether or not reproduction processing for the information recording medium 11 is performed according to the change of the positional information. For example, this judgment can be made as read-out information is inputted to the cache memory 16 or information stored in the cache memory 16 is transferred to the host 4 so that position information is changed. In addition, if this positional information has not been changed, it is indicated that input to the cache memory 16 or output form the cache memory 16 is not performed, and it is considered that readout from the host 4 is not performed. Thus, if this state has continued for a fixed period, the control unit 13 discards the average value of the cache use rate stored in the cache memory 16 and waits for a reproduction request for the information recordingmedium 11 to be sent from the user. If the positional information has changed before the fixed period has passes, the control unit 13 proceeds to step S86.

In step S86, the control unit 13 judges whether or not cache use rates equivalent to the sample number for finding the average value of the cache use rate stored in the cache memory 16 has been acquired. If this judgment is affirmed, the control unit 13 proceeds to step S87. If this judgment is denied, the control unit 13 returns to step S81 and continues the processing for measuring a cache use rate. Note that this sample number may be the number of times or a predetermined time.

Next, in step S87, the control unit 13 calculates, with the calculation unit 20, an average value of the cache use rate by divining the cache use rate stored in the cache memory 16 with the sample number, ends the execution sub-program, and proceeds to step S63.

In this way, the processing for calculating an average value of the cache use rate shown in FIG. 9 judges whether or not positional information has changed in a cache memory of a drive and also judges whether or not the change has continued for a fixed time. In addition, in the case in which a state in which the positional information has not changed has continued for the fixed time, the processing discards the cache use rate stored in the cache memory 16 and waits for a reproduction request for the information recording medium 11 to be sent from the user again. Consequently, for example in the case in which in a normal information reading processing, a readout request from the user is not made intermittently and suspension and resumption are repeated, since information is filled in a free space of a cache by lookahead, an average cache use rate can be prevented from being measured higher than a desired value.

As described above, the information reproduction apparatus 2 in this embodiment includes: the first drive unit 12 which rotates the information recording medium 11 in order to read out predetermined information; a readout unit 18 for reading out the predetermined information from the information recording medium 11; the cache memory 16 which has a fixed storage area for temporarily storing the read-out information when the information is read out by the readout unit 18; the detection unit 17 which detects a ratio occupied by the read-out and stored information with respect to a storage area for information recording medium readout of the cache memory 16 as a cache use rate when the information is read out; and the rotation control unit 13a which controls a rotation speed of the first drive unit 12 on the basis of the cache use rate detected by the detection unit 17.

The information reproduction apparatus 2 may include: the detection unit 17 which detects a cache use rate to be read out according to at least one of a predetermined time and a predetermined number of times; the calculation unit 20 for calculating an average value of the cache use rate detected by the detection unit 17; and the rotation control unit 13a for controlling a rotation speed of the drive means on the basis of the average value calculated by the calculation unit 20.

The information reproduction apparatus 2 may include: the comparison unit 21 which compares the calculated average value of the cash use rate with a predetermined threshold value; and the rotation control unit 13a for performing control so as to decrease the number of rotations of the first drive unit 12 in the case in which, as a result of the comparison by the comparison unit 21, the average value of the cache use rate has exceeded the predetermined threshold value.

The information reproduction apparatus 2 may include: the comparison unit 21 which compares the calculated average value of the cash use rate with a predetermined threshold value; and the rotation control unit 13a for performing control so as to increase the number of rotations of the first drive unit 12 in the case in which, as a result of the comparison by the comparison unit 21, the ratio occupied by stored information with respect to the storage area for information recording medium readout of the cache memory 16 is equal to or lower than the threshold value.

The cache memory 16 may include: the detection unit 17 which detects positional information, which indicates a state of change in an amount of information stored in the cache memory 16, and a state of change in the positional information; the judgment unit 23 which judges whether or not a state in which the positional information detected by the detection unit 17 has not changed has continued for a predetermined time or more; and a discard unit 22 serving as a re-measurement unit for re-measuring a cache use rate in the case in which, as a result of the judgment by the judgment unit 23, the state in which the positional information has not changed has continued for the predetermined time or more.

In this way, according to this embodiment, information is read out on the basis of a reproduction command which is issued from the host 4 in accordance with a reproduction request for the information recording medium 11 from a user, a use rate of a cache based upon positional information of the read-out information is measured to control a rotation speed of the first drive unit 12 (rotation speed of the information recording medium), whereby the number of rotations of the drive unit can be controlled in accordance with a difference of a readout form of the user.

For example, as shown in FIG. 2B, in the case in which reproduction of AV data is performed, processing for decreasing a readout speed (number of rotations) on a drive side is performed. As a result, the rotation speed of the first drive unit 12 is made substantially equal to a speed required for the host side to reproduce information, whereby vibration, noise, and the like of the drive 6 due to unnecessary high-speed rotation can be reduced.

For example, as shown in FIG. 2C, in the case in which processing for reading out AV data is processed at a low number of rotations, if a readout form of a user is changed to ripping or the like, processing for increasing a readout speed (number of rotations) on a drive side is performed. As a result, since a host side is not required to wait until information is stored in a cache memory on the drive side, processing from readout of information from an information recording medium to reproduction of the information can be performed efficiently.

(Fourth embodiment)

Next, a fourth embodiment will be described using the information reproduction apparatus shown in FIG. 1.

This embodiment has a characteristic in that, instead of performing rotation control of an information recording medium 11 on the basis of an average value of the command interval, which is calculated according to plural reproduction commands in the first embodiment, and the command interval, rotation control of the information recording medium 11 is performed on the basis of a dispersion value (variance) of an average value of a command interval and a state of previous rotation number control in addition to the average value of the command interval. Consequently, the rotation control of the information recording medium 11 can be performed more accurately.

For example, in the readout processing of the host 4 described in the first embodiment, even in ripping of data, an average value of a command interval may be equal to that during reproduction of AV data. In this case, if rotation of the information recording medium 11 is controlled only by the average value of the command interval as described in the first embodiment, it is likely that the number of rotations of the information recording medium 11 decreases during ripping of data, and a readout operation of the data cannot be performed accurately.

In addition, in the case in which a user performs fast-forward or rewinding during reproduction of AV data, since a transfer speed higher than that in reproduction is required, an interval of issuance of readout commands from the host 4 may be short. In that case, when an average value of a command interval becomes equal to or lower than a predetermined threshold value, the number of rotations of the information recording medium 11 increases. Thus, noise may be generated by the increase in the number of rotations of the information recording medium 11.

In this embodiment, even in such a case, it becomes possible to judge a use form of a user correctly and control the information recording medium 11 at a proper number of rotations according to the use form.

More specifically, in this embodiment, after comparing an average value of a command interval and a threshold value X, in the case in which the average value of the command interval is equal to or higher than the threshold value X, and the command interval or a dispersion value (variance) of the average value of the command interval is calculated to perform control of the number of rotations on the basis of the dispersion value.

In addition, after comparing an average value of a command interval and the threshold value X, in the case in which the average value of the command interval is equal to or lower than the threshold value X, the average value is further compared with a threshold value Y. In the case in which the average value of the command interval is equal to or lower than the threshold value Y, and one of a command interval equal to or larger than a predetermined threshold value P after the immediately preceding rotation number control is performed and an average value of the commands interval is detected to perform control of the number of rotations.

Next, a structure of this embodiment will be described. Note that, in a structure other than a signal processing unit 13c, descriptions about components common to the first embodiment will be omitted.

The signal processing unit 13c of the information reproduction apparatus of this embodiment includes: a readout unit 18 which reads out information of the information recording medium; a detection unit 17 which detects predetermined information; a measurement unit 19 which measures a command interval from the information recording medium 11; a calculation unit 20 which calculates an average value and a dispersion value of the command interval; a comparison unit 21 which compares the average value and the dispersion value of the command interval with a predetermined threshold value; a discard unit 22 which discards predetermined information; and a judgment unit 23 which judges whether a rotation speed is to be increased or decreased and instructs a rotation control unit 13a to that effect. In addition, the detection unit 17, the readout unit 18, the measurement unit 19, the calculation unit 20, the comparison unit 21, the discard unit 22, and the judgment unit 23 are connected to each other via a bus 10.

For example, the readout unit 18 constitutes a readout device of the present invention, and the detection unit 17 constitutes a detection device of the present invention. Further, for example, the measurement unit 19 constitutes a measurement device of the present invention, and the calculation unit 20 constitutes a calculation device and an arithmetic operation device of the present invention. Moreover, for example, the comparison unit 21 constitutes a comparison device of the present invention, and the judgment unit 23 constitutes a judgment device and a distinguishment device of the present invention. Furthermore, for example, the discard unit 22 constitutes a re-measurement unit and a re-measurement device of the present invention because the discard unit 22 discards information stored in a cache memory 16 and performs measurement again.

The readout unit 18 in this embodiment reads out contents information such as voice information and video information recorded in the information recording medium 11 on the basis of a reproduction command and outputs the information to the cache memory 16.

The detection unit 17 in this embodiment detects reproduction commands, which are inputted to the control unit 13, by the number of commands set in advance or for a predetermined time and outputs the respective units that the reproduction commands have been detected. In addition, the detection unit 17 detects a rotation speed of the information recording medium 11, which rotates when information is read out, and outputs information on the rotation speed to the judgment unit 23. More specifically, the detection unit 17 detects a rotation speed of the information recording medium 11 and outputs the rotation speed to the judgment unit 23 in order to judge whether or not information recorded in the information recordingmedium 11 is being read out by the readout unit 18 at a maximum or a minimum speed. Note that, since the information recording medium 11 is rotated by the first drive unit 12 , the detection unit 17 of this embodiment detects a rotation speed in this first drive unit 12.

The measurement unit 19 in this embodiment detects a head of the respective reproduction commands inputted to the control unit 13 and measures an interval from a point when readout of information, which is read out according to an arbitrary reproduction command, ends until a point when a reproduction command for information to be read out next is started.

The calculation unit 20 in this embodiment adds the command interval information measured by the measurement unit 19 to the accumulated command interval information stored in the cache memory 16 and stores the added-up accumulated command interval information in the cache memory 16 again. The calculation unit 20 acquires the accumulated command interval information stored in the cache memory 16 when the number of commands decided in advance is detected by the detection unit 17 or when the time set in advance is detected, calculates an average value of the command interval by dividing the accumulated command interval information by a sample number, stores the average value in the cache memory 16, and outputs the average value to the comparison unit 21. In addition, the calculation unit 20 calculates variance (dispersion value) of the average value of the command interval on the basis of average values of the command interval in the past stored in the cache memory 16 and outputs the dispersion value to the comparison unit 21. For example, the dispersion value can be found by the following expression.

[Expression 1]

$$S^2 = \frac{1}{n} \sum_{j=1}^{n} (X_i - \overline{X})^2$$

$S^2$ : Dispersion value

$n$ : Sample number

$X_i$ : Calculated value

$\overline{X}$ : Average value

For example, in the case in which average values (calculated values) of the command interval in two calculations in the past are 35 ms and 25 ms, and a present average value (calculated value) of the command interval is 30 ms, the average value is 30 ms and the dispersion value is 16. In addition, in the case in which average values (calculated values) of the command interval in three calculations in the past are 50 ms, 10 ms, and 30 ms, the average value is 30 ms, which is the same as the above, but the dispersion value is 266. In this embodiment, a use form of a user is j udged correctly taking into account the variance.

Note that, although the dispersion value is calculated according to average values of the command interval in the past in the above description, the dispersion value may be calculated using the command interval information in the past measured by the measurement unit 19.

The comparison unit 21 in this embodiment compares the average value of the command interval measured by the measurement unit 19 and a predetermined threshold value and outputs a result of the comparison to the discard unit 22. In addition, the comparison unit 21 compares the average value of the command interval calculated by the calculation unit 20 and a predetermined threshold value and outputs a result of the comparison to the judgment unit 23. In addition, if the average value of the command interval is equal to or higher than the predetermined threshold value, the comparison unit 21 compares the dispersion value calculatedby the calculation unit 20 and the predetermined threshold value and outputs a result of the comparison to the judgment unit 23.

In the case in which the average value of the interval of the commands measured by the measurement unit 19 has continued for the predetermined time or more, the discard unit 22 in this embodiment discards the accumulated command interval information stored in the cache memory 16, that is, resets the accumulated command interval information.

The judgment unit 23 judges whether or not a rotation speed of the first drive unit 12 is a proper rotation speed on the basis of a result of detection by the detection unit 17 and a result of the comparison by the comparison unit 21 and instructs the rotation control unit to increase or decrease the rotation speed. More specifically, the judgment unit 23 in this embodiment judges whether the rotation speed of the information recording medium 11 is to be increased or decreased, which is judged on the basis of the result of the detection and the result of the comparison and, in the case in which the rotation speed is increased or decreased, the judgment unit 23 instructs the rotation control unit 13a to that effect.

In addition, if the average value of the command interval is equal to or larger than the threshold value X in the result of the comparison, the judgment unit 23 judges that, for example, AV reproduction is being performed, and outputs a result of the judgment to the calculation unit 20.

Moreover, if the average value of the command interval is equal to or larger than the threshold value X in the result of the comparison, the judgment unit 23 judges whether or not the dispersion value is equal to or larger than the predetermined threshold value Z. Usually, since the dispersion value is small during AV reproduction, if the dispersion value is equal to or larger than the predetermined threshold value Z, for example, the judgment unit 23 judges that ripping is being performed and instructs the rotation control unit 13a to maintain the rotation speed. In addition, if the dispersion value is equal to or smaller than the threshold value Z, the judgment unit 23 judges whether or not the information recording medium 11 is rotating at a speed higher than the predetermined number of rotations and instructs the rotation control unit 13a to decrease the rotation speed if the information recordingunit 11 is rotating at a high speed. Note that, if the information recording medium 11 is rotating at a speed lower than the predetermined number of rotations, the judgment unit 23 instructs the rotation control unit 13a to maintain the rotation speed.

In this way, high-speed rotation can be maintained during ripping and low-speed rotation is maintained during AV reproduction to judge a use form of the user accurately, whereby the information recording medium 11 can be controlled at a proper number of rotations.

In addition, the judgment unit 23 judges whether or not the average value of the command interval is equal to or smaller than the threshold value Y. If the average value of the command interval is equal to or smaller than the threshold value Y, for example, the judgment unit 23 judges that ripping is being performed and judges whether or not an average value of the command interval equal to or larger than a first predetermined threshold value P after the command interval was measured before, and rotation number control with which the number of rotations of the information recording medium 11 is controlled to change from high-speed rotation to low-speed rotation on the basis of the average value of the command interval calculated according to the command interval. In the case in which the average value of the command interval equal to or larger than the predetermined threshold value P has been detected, the judgment unit 23 judges whether or not the information recording medium 11 is rotating at a speed lower than the predetermined number of rotations. If the information recording medium 11 is rotating at a low speed, the judgment unit 12 instructs the rotation control unit 13a to increase the rotation speed. More specifically, in a state in which a command interval is measured by the measurement unit 19, an average value of the command interval is calculated on the basis of the measured interval of commands by the calculation unit 20, and the number of rotations of the information recording medium 11 is controlled based on the average value of the command interval, it is detected whether an average value of the command interval equal to or larger than the predetermined threshold value P is generated after the number of rotations of the information recording medium 11 is controlled to change from high-speed rotation to low-speed rotation. In addition, in the case in which an average value of the command interval equal to or larger than the predetermined threshold value P is generated, a first average value of the command interval, which is equal to or larger than the predetermined threshold value P after the number of rotations of the information recording medium 11 is controlled to change from high-speed rotation to low-speed rotation, is detected. Thus, it is unclear whether or not an average value of the command interval equal to or larger than the predetermined threshold value P is generated after the number of rotations of the information recording medium 11 is controlled to change from high-speed rotation to low-speed rotation. Then, in the case in which an average value of the command interval equal to or larger than the predetermined threshold value P is generated, control of the number of rotations is performed. In the case in which an average value of the command interval equal to or larger than the predetermined threshold value P is not generated, control for maintaining the number of rotations is performed.

Note that, if the information recording medium 11 is rotating at a speed higher than the predetermined number of rotations, the j udgment unit 12 instructs the rotation control unit 13a to maintain the rotation speed.

In addition, if the average value of the command interval is equal to or larger than the threshold value X and equal to or smaller than the threshold value Y, the judgment unit 23 instructs the rotation control unit 13a to maintain the rotation speed.

In this way, for example, in the case in which the user has performed fast-forward, rewinding, or the like during AV reproduction, the predetermined number of rotations is maintained, and in the case in which the user has changes a form fromAV reproduction to ripping, the number of rotations is increased to judge a use form of the user accurately, whereby the information recording medium 11 can be controlled at a proper number of rotations.

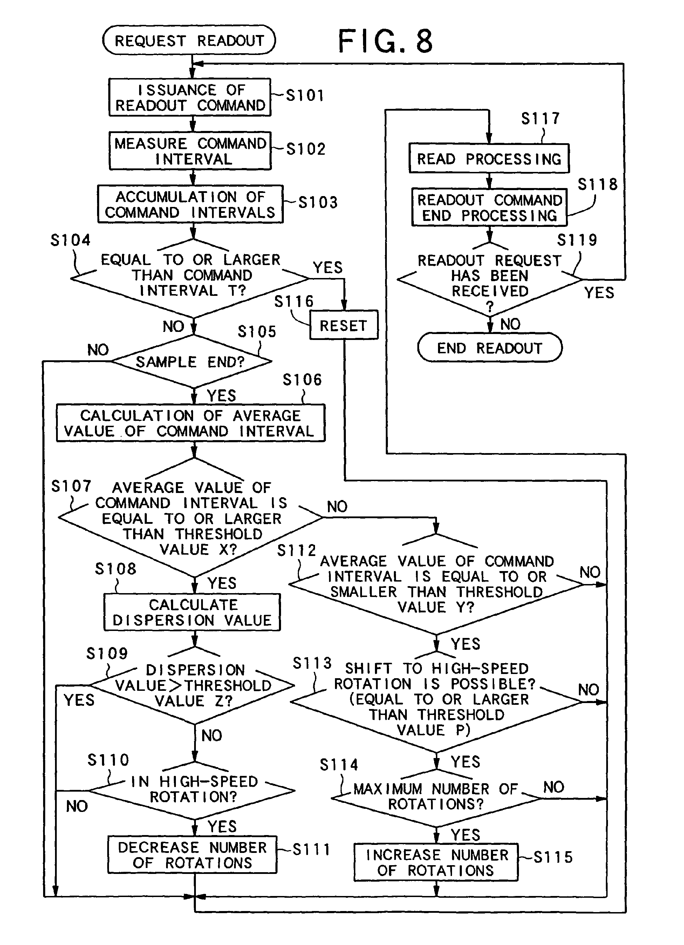

Next, an operation of rotation control of the information recording medium 11 will be described using the information reproducing apparatus 2 shown in FIG. 1. The operation will be hereinafter described for each step with reference to FIG. 8.

Note that FIG. 8 is a flowchart showingprocessingwhich is executed on the basis of a readout request from a user in the fourth embodiment.

Note that it is assumed that an interval T of commands, a threshold value X, a threshold value Y, a threshold value Z, and a threshold value P used in this embodiment are not limited to those in the embodiment but can be changed.

In step S101 in FIG. 8, the host 4 issues a reproduction command in accordance with a reproduction request for the information recording medium 11, which is an instruction from the user, and he first drive unit 12 starts processing for controlling a rotation speed on the basis of the reproduction command.

More specifically, the host 4 issues a reproduction command for reproducing information recorded in the information recording medium 11 on the basis of the reproduction request for the information recording medium 11 from the user and transfers the reproduction command to the drive 6 via the controller 5.

Next, in step S102, the control unit 13 measures a command interval with the measurement unit 19.

In step S102, the control unit 13 detects the reproduction command inputted from the host 4 and measures a command interval until the next reproduction command is issued in step S101. More specifically, the control unit 13 measures an interval the end of DI to the beginning of the next CM shown in FIGS. 2A to 2C.

Next, in step S103, the control unit 13 accumulates the command interval information measured by the calculation unit 20.

In step S103, the control unit 13 adds the measured command interval information to the command interval information already stored in the cache memory 16 to accumulate the command interval information and stores the accumulated command interval information in the cache memory 16.

Note that, in the case in which accumulated command interval information has not been stored in the cache memory 16, the control unit 13 does not add the measured command interval to any value but stores the command interval information.

Next, in step S104, the control unit 13 judges whether or not the measured command interval is equal to or larger than the threshold value T. If this judgment is affirmed, the control unit 13 proceeds to step S116, where the control unit 13 discards (deletes) the command interval information, and proceeds to step S117. If this judgment is denied, the control unit 13 proceeds to step S105. The threshold value T of the command interval used in step S104 is, for example, 500 ms.

In step S104, the control unit 13 judges whether or not the measured interval of commands is effective as data. This is for the purpose of preventing a low average command interval value from being calculated to perform undesirable control of a rotation speed in the case in which a command interval is significantly increased due to, a change in an instruction of the user (for example, when a user repeatedly pauses and resume).

Note that, if the measured interval of commands is effective as data in this judgment, the control unit 13 continues the processing. If the measured interval of commands is ineffective as data, the control unit 13 discards the command interval information stored in the command interval cache memory 16 and performs measurement of a command interval, that is, accumulation of command interval information again.

As described in the first embodiment, in the information reproduction apparatus 2 of this application, in the case in which the command interval has increased to the threshold value T or more in a state in which the number of rotations is high (e.g. , during reproduction of AV data) , control for decreasing the number of rotations is performed. Thus, it is necessary to prevent measurement of a command interval from being performed incorrectly at the time when reading out at high-speed rotation is desirable such as the time of normal data readout. For example, in the normal data readout, in the case in which a readout request from the user is not made intermittently and suspension and resumption are repeated, a command interval is measured to be longer than it actually is. Thus, in this embodiment, since command interval information is discarded andmeasured againby adding step S104, erroneous measurement of a command interval can be prevented. Thus, decrease in the number of rotations at the time of normal data readout can be prevented.

Next, in step S105, the control unit 13 judges whether or not intervals of commands for a predetermined sample number (e.g. , the number of commands) have been detected according the detected reproduction command. If this judgment is affirmed, the control unit 13 proceeds to step S106. If this judgment is denied, the control unit 13 proceeds to step S117.

In step S105, more specifically, the control unit 13 judges whether or not the predetermined time has elapsed or whether or not command interval information equivalent to a predetermined sample number could have been acquired.

Next, in step S106, the control unit 13 calculates an average value of the command interval by dividing the accumulated command interval information by the sample number set in advance, that is, the detected number of commands.

Next, in step S107, the control unit 13 judges, with the comparison unit 21, whether or not the average value of the command interval is equal to or larger than the threshold value X set in advance. If this judgment is affirmed, the control unit 13 proceeds to step S108. If this judgment is denied, the control unit 13 proceeds to step S112. In addition, the threshold value X used in this processing is, for example, 10 ms.

In step S107, it is judged whether or not the average value of the command interval is in a state as shown in FIG. 2B. More specifically, for example, the control unit 13 judges whether or not AV reproduction is being performed.

Next, in step S108, the control unit 13 calculates variance (dispersion value) of the average value of the command interval with the calculation unit 20. Usually, since variance (dispersion value) of the average value of the command interval decreases during AV data reproduction, a use form of the user can be judged more correctly by this processing.

Next, in step S109, the control unit 13 judges, with the comparison unit 21, whether or not the dispersion value has exceeded the threshold value Z. If this judgment is affirmed, the control unit 13 proceeds to step S117. If this judgment is denied, the control unit 13 proceeds to step S110. The threshold value Z used in this processing is, for example, 40.

In step S109, the control unit 13 judges a form of the information recording medium 11 considering a variance state of the average value of the command interval. More specifically, if variance is large, since the variance is in a state of, for example, ripping, the control unit 13 performs control for maintaining the number of rotations of the information recordingmedium 11. In addition, if variance is small, since the variance is in a state of, for example, AV reproduction, the control unit 13 performs control for decreasing the number of rotations if the information recording medium 11 is rotating at a high speed.

Next, in step S110, the control unit 13 judges, with the judgment unit 23, whether or not a rotation speed is higher than a predetermined rotation speed. If this judgment is affirmed, the control unit 13 proceeds to step S111. If this judgment is denied, the control unit 13 proceeds to step S117.

In step S110, the control unit 13 checks a rotation speed of the first drive unit 12 and judges whether or not the rotation speed of the information recording medium 11 can be decreased.

Next, in step S111, the control unit 13 performs processing for controlling the first drive unit 12 to decrease the rotation speed of the information recording medium 11 to a predetermined value.

In this way, readout is processed at a low speed by decreasing the rotation speed of the first drive unit 12, whereby vibration, noise, and the like of the drive 6 due to unnecessary high-speed rotation can be reduced.

Next, when the control unit 13 judges in step S107 that the average value of the command interval is a value lower than the threshold value X, in step S112, the control unit 13 judges, with the udgment unit 23, whether or not the average value of the command interval is equal to or smaller than the threshold value Y. If this judgment is affirmed, the control unit 13 proceeds to step S113. If this judgment is denied, the control unit 13 proceeds to step S117. The threshold value Y used in this processing is, for example, 2 ms.

In step S112, the control unit 13 judges whether or not the average value of the command interval is in a state as shown in FIG. 2C. More specifically, for example, the control unit 13 judges whether or not ripping is being performed.

Next, in step S113, the judgment unit 23 of the control unit 13 judges whether or not an average value of the command interval equal to or larger than the predetermined threshold value P has been generated after the information recording medium 11 was controlled to change from high-speed rotation to low-speed rotation by the rotation control unit 13a last time. If this judgment is affirmed, the control unit 13 proceeds to step s114. If this judgment is denied, the control unit 13 proceeds to step S117. The threshold value P used in this processing is, for example, one second.

In step S113, the control unit 13 judges a form of the information recording medium 11 according to whether or not an average value of the command interval equal to or larger than the predetermined threshold value P has been generated after the information recording medium 11 was controlled to change from high-speed rotation to low-speed rotation by the rotation control unit 13a previously. In addition, the control unit 13 detects an average value of the command interval which has increased to the threshold value P or more for the first time after the rotation control from high-speed rotation to low-speed rotation was performed. More specifically, if an average value of the command interval larger than the predetermined threshold value P is generated in a predetermined period, for example, the control unit 13 judges that the information recording medium 11 is in a transition state from the AV reproduction to ripping, and performs control for increasing the number of rotations of the information recording medium 11. In addition, if the average value of the command interval is smaller than the threshold value in the predetermined period, for example, the control unit 13 judges that the information recording medium 11 is in a state of AV reproduction, and performs control for maintaining the number of rotations of the information recording medium 11.

As described in the first embodiment, the information reproduction apparatus 2 of this application controls the number of rotations of an information recording medium on the basis of an average value of a command interval. Therefore, for example, when a user performs fast-forward or rewinding during AV reproduction, the average value of the command interval is reduced. As a result, control for increasing the number of rotations of the information recording medium 11 is performed. Thus, regardless of the fact that AV data is reproduced, the number of rotations of the information recording medium 11 increases, and it is likely that a problem such as generation of noise occurs. Thus, in this embodiment, step S113 is added, and control from low-speed rotation to high-speed rotation is performed only when the average value of the command interval increases to be equal to or larger than the predetermined threshold value P or more after the rotation of the information recordingmedium 11 was controlled to change from high-speed rotation to low-speed rotation by the rotation control unit 13a previously. If the average value of the command interval does not increase to be larger than the threshold value P at all in a predetermined period, even if the average value of the command interval decreases to be equal to or smaller than the threshold value Y, the information recording medium 11 is never controlled to rotate at a high-speed. Thus, for example, occurrence of increase and decrease of the number of rotations during AV data appreciation can be prevented.

On the other hand, in the case in which the user changes a use form from AV data reproduction to ripping, and it is necessary to improve performance by increasing the number of rotations of the information recording medium 11, usually, the average value of the command interval is increased by the user's operation for ending/starting application software. Thus, the threshold value P only has to be determined taking into account a time of the average value of the command interval.

Next, in step S114, the control unit 13 causes the judgment unit 23 to detect a rotation speed of the first drive unit 12 and judges whether or not the rotation speed is lower than a predetermined rotation speed. If this judgment is affirmed, the control unit 13 proceeds to step S115. If this judgment is denied, the control unit 13 proceeds to step S117.

In step S114, the control unit 13 checks a rotation speed of the first drive unit 12 and judges whether or not the rotation speed of the information recording unit 11 can be increased.

Next, in step S115, the control unit 13 controls the rotation control unit 13a to performprocessing for increasing the rotation speed of the first drive unit 12 to a predetermined value.

In step S116, the control unit 13 discards, with the discard unit 22, the command interval information stored in the cache memory 16.

In step S116, the control unit 13 judges that the measured interval of commands is ineffective as data, discards the command interval information stored in the cache memory 16, and performs measurement of a command interval again.

Next, in step S117, the control unit 13 performs, with the readout unit 18, processing for reading out information based upon a reproduction command from the information recording medium 11 via the pickup control unit 13b.

In step S117, the read-out information is transferred to the host 4 via the controller 5. In addition, the host 4 outputs the read-out information to the monitor 7 and the speaker 8 via the controller 5.

Next, in step S118, the control unit 13 performs, with the measurement unit 19, command end processing for the reproduction command issued in step S101.

Next, in step S119, the control unit 13 judges whether or not the next readout request has been sent from the user. If this judgment is affirmed, that is, if the next reproduction command has been issued from the host 4, the control unit 13 returns to step s101. If the judgment is denied, the control unit 13 ends the reproduction processing of information based upon the reproduction request for the information recording medium 11 from the user.

As described above, the information reproduction apparatus 2 in this embodiment includes: the comparison unit 21 which, in the case in which a command interval was measured before, compares an average value of the command interval with a threshold value set in advance; the calculation unit 20 for, in the case in which the average value of the command interval is equal to or larger than the threshold value X as a result of the comparison by the comparison unit 21, calculating a dispersion value on the basis of one of the command interval measured before and an average value of the command interval which is calculated on the basis of the command interval measured before; and the judgment unit 23 for judging whether or not the dispersion value is equal to or larger than the dispersion threshold value Z which is a threshold value set in advance for comparison with the dispersion value, and the rotation control unit 13a controls a rotation speed of the first drive unit 12 on the basis of a result of the judgment by the judgment unit 23.

In addition, the information reproduction apparatus 2 includes: the detection unit 18 for detecting a rotation speed of the information recording medium 11 in the case in which it is judged by the judgment unit 23 that the dispersion value is smaller than the dispersion threshold value Z; and the judgment unit 23 for judging whether or not the information recording medium 11 is being rotated at a high speed as a result of the detection by the detection unit 18, and the rotation control unit 13a decreases the number of rotations of the information recording medium 11 in the case in which the information recording medium 11 is being rotated at a high speed as a result of the judgment of the judgment unit 23.

Further, the information reproduction apparatus 2 includes: the comparison unit 21 which, in the case in which a command interval was measured before and rotation number control for controlling the number of rotations of the information recording medium 11 from high-speed rotation to low-speed rotation is performed on the basis of an average value of the command interval calculated according to the measured interval of commands, the comparison unit 21 which compares an average value of the command interval with a threshold value P set in advance; the detection unit 17 which, in the case in which the average value of the command interval is equal to or smaller than the threshold value, detects an average value of the command interval equal to or larger than a predetermined threshold value after immediately preceding rotation number control is performed, and the rotation control unit 13a controls the rotation speed of the first drive unit 12 on the basis of a result of the detection by the detection unit 17.

Moreover, the information reproduction apparatus 2 includes: the detection unit 17 for, in the case in which an average value of the command interval equal to or larger than the threshold value P is detected by the detection unit 17, detecting a rotation speed of the information recording medium 11; and the judgment unit 23 for judging whether or not the information recording medium 11 is being rotated at a low speed as a result of the detection by the detection unit 17, and the rotation control unit 13a increases the number of rotations of the information recording medium 11 in the case in which the information recording medium 11 is being rotated at a low speed as a result of the judgment by the judgment unit 23.

As described above, according to this embodiment, a command interval is detected and an average value of the interval of command is calculated on the basis of a reproduction command issued from the host in accordance with a reproduction request for the information recording medium 11 from the user, and if the average value of the command interval is equal to or larger than the predetermined threshold value X, a dispersion value of the average value of the command interval is further calculated, the dispersion value and the predetermined threshold value z are compared, and a rotation speed of the first drive unit 12 (rotation speed of the information recording medium 11) is controlled on the basis of a result of the comparison. In addition, if the average value of the command interval is equal to or smaller than the predetermined threshold value Y, in the case in which the number of rotations of the information recording medium 11 is controlled to change from high-speed rotation to low-speed rotation on the basis of the average value of the command interval measured and calculated before, rotation of the information recording medium 11 is controlled to change from low-speed rotation to high-speed rotation only when the average value of the command interval increases to be larger than the predetermined threshold value P after the rotation control.

Consequently, it becomes possible to judge a use form of a user correctly and control an information recordingmedium at a proper number of rotations according to the use form.

It should be understood that various alternatives to the embodiment of the invention described herein may be employed in practicing the invention. Thus, it is intended that the following claims define the scope of the invention and that methods and structures within the scope of these claims and their equivalents be covered thereby.

**Claims**

1. An information reproduction apparatus (2), **characterized in that** the information reproduction apparatus comprises:

   a driving device (12) which rotates an information recording medium in order to read out predetermined information from the information recording medium (11);
   a reading device (18) which reads out the information on the basis of commands issued from an external host;
   a measurement device (19) which measures a command interval of the commands; and
   a rotation control device (13a) which controls a rotation speed of the driving device on the basis of the command interval measured by the measurement device.

2. The information reproduction apparatus according to claim 1, further comprises a calculation device (20) which calculates an average value of the command interval on the basis of plural command intervals which are generated at least one of a predetermined time and a predetermined number of times,
   wherein the rotation control device (13a) controls a rotation speed of the driving device on the basis of the average value of the command interval calculated by the calculation device.

3. The information reproduction apparatus according to claim 2, further comprises a comparison device (21) which compares the calculated average value of the command interval and a predetermined threshold value,
   wherein the rotation control device performs control for decreasing the number of rotations of the driving device in the case in which the average value of the command interval has exceeded the threshold value as a result of the comparison by the comparison device.

4. The information reproduction apparatus according to claim 2 or 3, further comprises a comparison device (21) which compares the detected average value of the command interval and a predetermined threshold value,
   wherein the rotation control device performs control for increasing the number of rotations of the driving device in the case in which the average value of the command interval is equal to or smaller than the threshold value as a result of the comparison by the comparison device.

5. The information reproduction apparatus according to claim 1, further comprises:

   a rotation number judgment device (17) which judges whether or not the rotation speed of the driving device has exceeded a predetermined rotation speed; and
   a comparison device (21) which compares the command interval with a predetermined threshold value,

   wherein the rotation control device controls the rotation speed of the driving device on the basis of a result of the judgment by the rotation number judgment device and a result of the comparison by the comparison device.

6. The information reproduction apparatus according to claim 5, further comprises a continuity judgment device (23) which judges whether or not the measurement of the command interval has been performed continuously for a threshold value or more which is defined by at least one of a predetermined time or a predetermined number of times,
   wherein the rotation control device which controls the rotation speed of the driving device on the basis of a result of the judgment by the rotation number judgment device, a result of the judgment by the continuity judgment device, and a result of the comparison by the comparison device.

7. The information reproduction apparatus according to claim 1, further comprises a re-measurement device (22) which re-measures the command interval in the case in which the command interval has been continuing for a predetermined time or more.

8. An information reproduction apparatus **characterized in that** the information reproduction apparatus comprises:

a driving device (12) which rotates an information recording medium in order to read out predetermined information;

a readout device (18) which reads out the predetermined information from the information recording medium;

a storing device (16) which has a predetermined storage area for temporarily storing the read-out information;

a detection device (17) which detects a ratio, which is occupied by the read-out and stored information with respect to the storage area of the storing device, as cache use rate information; and

a rotation control device (13a) which controls a rotation speed of the driving device on the basis of the cache use rate information detected by the detection device.

9. The information reproduction apparatus according to claim 8, further comprises:

a detection device (17) which detects the cache use rate information which is read out according to at least one of a predetermined time and a predetermined number of times;

a calculation device (20) which calculates an average value of the cache use rate information detected by the detection device; and

a rotation control device (13a) for controlling the rotation speed of the drive unit on the basis of the average value calculated by the calculation device.

10. The information reproduction apparatus according to claim 9, further comprises a comparison device (21) which compares the calculated average value of the cache use rate information with a predetermined threshold value,

wherein the rotation control device controls performs control to decrease the number of rotations of the driving device in the case in which the average value of the cache use rate information has exceeded the threshold value as a result of the comparison by the comparison device.

11. The information reproduction apparatus according to claim 9 or 10, further comprises a comparison device (21) which compares the calculated average value of the cache use rate information with a predetermined threshold value,

wherein the control device performs control to increase the number of rotations of the driving device in the case in which a ratio, which is occupied by the stored information with respect to the storage area of the storing device, is equal to or lower than the threshold value as a result of the comparison by the comparison device.

12. The information reproduction apparatus according to claim 8,

wherein the storing device comprises:

positional information indicating a state of change in an amount of information stored in the storing device;

a detection device which detects a state of change in the positional information;

a judgment device which judges whether or not a state in which the positional information detected by the detection device does not change has continued for a predetermined time or more; and

a re-measurement device for re-measuring cache use rate information in the case in which the state in which the positional information does not change has continued for the predetermined time ore more as a result of the judgment by the judgment device.

13. An information reproduction method of reading out information from a predetermined information recordingmedium and reproducing the information, **characterized in that** the information reproduction method comprises:

a drive process of rotating the information recording medium at a predetermined number of rotations;

a readout process of reading out the information from the rotating information recording medium on the basis of commands which are continuously issued on the basis of instructions from a user;

a detection process of detecting the commands; and

a measurement process of measuring a command interval of the commands,

wherein, in the drive process, the rotation speed is changed on the basis of the measured command interval.

14. An information reproduction method of reading out information from a predetermined information recordingmedium and reproducing the information, **characterized in that** the information reproduction method comprises:

a drive process of driving to rotate the information recording medium at a predetermined number of rotations;
a readout process of reading out predetermined information from the rotating information recording medium;
a storing process of temporarily storing the read-out information in a storing device having a fixed storage area; and
a detection process of detecting a ratio which is occupied by the stored information with respect to the storage area of the storing device,

wherein, in the drive process, the rotation speed is changed on the basis of the ratio occupied by the detected information.

**15.** The information reproduction device according to claim 2, further comprises a comparison device which compares the calculated average value of the command interval with each of first and second threshold values set in advance, wherein the rotation control device decreases a number of rotations of the driving device in the case in which the average value of the command interval is equal to or larger than the first threshold value and increases the number of rotations of the driving device in the case in which the average value of the command interval is equal to or smaller than the second threshold value as a result of the comparison by the comparison device.

**16.** The information reproduction apparatus according to claim 2, further comprises:

a comparison device which, in the case in which a command interval is measured before, compares the average value of the command interval with a threshold value set in advance;
a calculation device for calculating a dispersion value on the basis of one of the command interval measured before and an average value of the command interval which is calculated on the basis of the command interval measured before in the case in which the average value of the command interval is equal to or larger than the threshold value as a result of the comparison by the comparison device; and
a judgment device for judging whether or not the dispersion value is equal to or larger than a dispersion threshold value which is a threshold value set in advance for comparison with the dispersion value,

wherein the rotation control device controls the rotation speed of the driving device on the basis of a result of the judgment by the judgment device.

**17.** The information reproduction apparatus according to claim 16, further comprises:

a detection device for detecting a rotation speed of the information recording medium in the case in which it is judged by the judgment device that the dispersion value is smaller than the dispersion threshold value; and
a judgment device for judging whether or not the information recording medium is rotating at a high speed as a result of the detection by the detection device,

wherein the rotation control device decreases the number of rotations of the information recording medium in the case in which the information recording medium is rotating at a high speed as a result of the judgment by the judgment device.

**18.** The information reproduction apparatus according to claim 2, further comprises:

a comparison device which, in the case in which a command interval is measured before, and rotation number control for controlling the number of rotations of the information recording medium to change from high-speed rotation to low-speed rotation is performed on the basis of an average value of the command interval calculated according to the measured command interval, compares the average value of the command interval with a threshold value for rotation control which is a threshold value set in advance; and
a detection device which, in the case in which the average value of the command interval is equal to or smaller than the threshold value, detects an average value of the command interval equal to or larger than the threshold value for rotation control after immediately preceding rotation number control is performed,

wherein the rotation control device controls a rotation speed of the driving device on the basis of a result of the detection by the detection device.

**19.** The information reproduction apparatus according to claim 18, further comprises:

a rotation number detection device which, in the case in which an average value of the command interval equal to or larger than the threshold value is detected by the detection device, detects a rotation speed of the information recording medium; and
a judgment device for judging whether or not the information recording medium is rotating at a low speed as a result of the detection by the detection device,

wherein the rotation control device increases the number of rotations of the information recording medium in the case in which the information recording medium is rotating at a low speed as a result of the judgment by the judgment device.

20. An information recording medium in which a rotation control program is recorded in a readable way by a recording computer included in am information reproduction apparatus, **characterized in that** the rotation control program causing the recording computer to function as:

a readout device for reading out the information from the information recording medium rotated by the driving device on the basis of commands which are issued continuously on the basis of instructions of a user;
a detection device for detecting the commands;
a measurement device for measuring a command interval of the commands; and
a rotation control device which controls a rotation speed of the driving device on the basis of the command interval measured by the measurement device.

21. An information recording medium in which a rotation control program is recorded in a readable way by a recording computer included in am information reproduction apparatus, **characterized in that** the rotation control program causing the computer to function as:

a readout device for reading out predetermined information from the rotating information recording medium;
a storing device which temporarily stores the information read out by the readout device in a predetermined storage area;
a detection device which detects a ratio which is occupied by the stored information with respect to the storage area of the storing device; and
a rotation control device which controls the rotation speed of the information recording medium on the basis of the ratio, which is occupied by the information, detected by the detection device.

# FIG. 1

# FIG. 2A

# FIG. 2B

# FIG. 2C

# FIG. 3

# FIG. 4

EP 1 480 211 A2

# FIG. 5

```
                    ( REQUEST READOUT )
                            |
                            |
                    +-------------------+
                    |   READOUT OF      |— S61
                    |   INFORMATION     |
                    +-------------------+
                            |
                    +-------------------+
                    | MEASUREMENT OF AVERAGE |— S62
                    |   CACHE USE RATE  |
                    +-------------------+
                            |
        S63                 |
          <  AVERAGE CACHE USE RATE            NO
             IS EQUAL TO OR LARGER  >——————————————+
             THAN THRESHOLD                        |
             VALUE Y?                              |
                   |                    S66        |
                   | YES          < AVERAGE CACHE USE RATE      NO
        S64        |                IS EQUAL TO OR SMALLER >————————+
        < MINIMUM NUMBER            THAN THRESHOLD            |
   YES    OF ROTATIONS? >            VALUE X?                 |
   +——+        |                          |                  |
   |           | NO                       | YES              |
   | S65  +-------------------+    S67     |                 |
   |      | DECREASE NUMBER   |      < MAXIMUM NUMBER    YES  |
   |      |   OF ROTATIONS    |         OF ROTATIONS? >——————+
   |      +-------------------+              |               |
   |           |                            | NO            |
   |           |                    +-------------------+   |
   |           |                    | INCREASE NUMBER   |—S68|
   |           |                    |   OF ROTATIONS    |   |
   |           |                    +-------------------+   |
   |           +———————————————————————————+               |
   |                     |                                  |
  (1)————————————————————+                                  |
                         |                                  |
                         |          S69                     |
                 < READOUT REQUEST     YES                  |
                      HAS BEEN    >————————————————————————+
                     RECEIVED? >
                         |
                         | NO
                  ( END READOUT )
```

# FIG. 6

```
┌─────────────────────────┐
│   START  MEASUREMENT  OF │
│ AVERAGE  CACHE  USE  RATE│
└─────────────────────────┘
            │
            ▼
   ┌──────────────────┐
   │   MEASURE  CACHE │── S71
   │     USE  RATE    │
   └──────────────────┘
            │
            ▼
   ┌──────────────────┐
   │ ACCUMULATE  CACHE│── S72
   │     USE  RATE    │
   └──────────────────┘
            │
            ▼           S73
         ◇─────────◇      NO
        SAMPLE  END? ───────┐
         ◇─────────◇        │
            │ YES           │
            ▼               │
   ┌──────────────────┐     │
   │ CALCULATE AVERAGE│── S74│
   │   CACHE USE RATE │     │
   └──────────────────┘     │
            │               │
            ▼               │
┌─────────────────────────┐ │
│   END  MEASUREMENT  OF  │ │
│ AVERAGE  CACHE  USE  RATE│ │
└─────────────────────────┘ │
```

# FIG. 7

START MEASUREMENT OF
AVERAGE CACHE USE RATE

MEASURE CACHE
USE RATE — S81

ACCUMULATE CACHE
USE RATES — S82

TRANSFER CACHE POINTER
HAS CHANGED? — S83

NO

CONTINUED FOR
FIXED TIME T? — S84

YES

NO

RESET — S85

YES

(1)

YES

SAMPLE END? — S86

NO

CALCULATE AVERAGE
CACHE USE RATE — S87

END MEASUREMENT OF
AVERAGE CACHE USE RATE

# FIG. 8

REQUEST READOUT

ISSUANCE OF READOUT COMMAND — S101

MEASURE COMMAND INTERVAL — S102

ACCUMULATION OF COMMAND INTERVALS — S103

S104 EQUAL TO OR LARGER THAN COMMAND INTERVAL T? — YES

NO

S105 SAMPLE END? — NO

YES

S106 CALCULATION OF AVERAGE VALUE OF COMMAND INTERVAL

S107 AVERAGE VALUE OF COMMAND INTERVAL IS EQUAL TO OR LARGER THAN THRESHOLD VALUE X? — NO

YES

S108 CALCULATE DISPERSION VALUE

S109 DISPERSION VALUE > THRESHOLD VALUE Z? — YES

NO

S110 IN HIGH-SPEED ROTATION? — NO

YES

DECREASE NUMBER OF ROTATIONS — S111

S116 RESET

S117 READ PROCESSING

S118 READOUT COMMAND END PROCESSING

S119 READOUT REQUEST HAS BEEN RECEIVED? — YES

NO

END READOUT

S112 AVERAGE VALUE OF COMMAND INTERVAL IS EQUAL TO OR SMALLER THAN THRESHOLD VALUE Y? — NO

YES

S113 SHIFT TO HIGH-SPEED ROTATION IS POSSIBLE? (EQUAL TO OR LARGER THAN THRESHOLD VALUE P) — NO

YES

S114 MAXIMUM NUMBER OF ROTATIONS? — NO

YES

INCREASE NUMBER OF ROTATIONS — S115